(19) Europäisches Patentamt
European Patent Office
Office européen des brevets

(11) **EP 1 953 903 A1**

(12) **EUROPEAN PATENT APPLICATION**

(43) Date of publication:
**06.08.2008 Bulletin 2008/32**

(51) Int Cl.:
**H02K 41/035** $^{(2006.01)}$

(21) Application number: **07001974.0**

(22) Date of filing: **30.01.2007**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK RS**

(71) Applicant: **Magtronics Technology Inc.**
**Zhongxiao Rd.**
**Hsinchu City (TW)**

(72) Inventor: **Tseng, Yu-Kuang**
**No.5, Lane 276**
**Hsinchu City (TW)**

(74) Representative: **Becker Kurig Straus**
**Patentanwälte**
**Bavariastrasse 7**
**80336 München (DE)**

(54) **Voice coil motor and method of using a magnetic restoring force for displacement control**

(57)    The present invention proposed a voice coil motor and a method of using magnetic restoring force for displacement control. The voice coil motor comprises a magnetic member and an electric member. The magnetic member generates a magnetic field. The electric member includes at least a coil and a ferromagnetic component. The coil can generate thrust when current is applied, and the ferromagnetic component can generate magnetic restoring force and normal coupling force. The voice coil motor further includes a suspension member, and is characterized in that the normal coupling force can preload the suspension member to eliminate the tilt angle and free play. Through the balance between the thrust generated by the coil current and the magnetic restoring force, open-loop displacement control can be accomplished without any elastic component.

EP 1 953 903 A1

## Description

## Background of the invention

### 1. Field of the invention

The present invention relates to a voice coil motor, particularly to a miniaturized voice coil motor applicable to high-repeatability displacement control. The present invention further relates to a method of using magnetic restoring forces of the voice coil motor to achieve displacement control.

### 2. Description of Related art

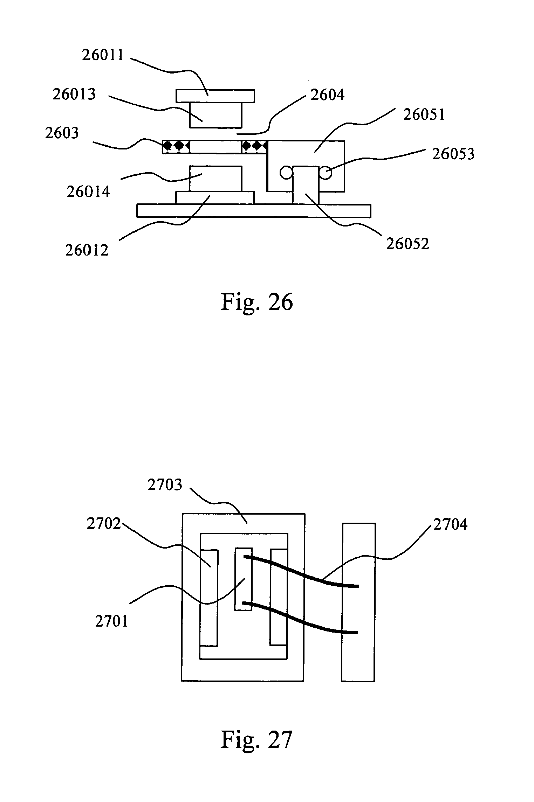

As shown in Fig. 26, a conventional voice coil motor comprises a stationary magnetic member and a movable electric member. The magnetic member is composed of an upper yoke 26011, a lower yoke 26012 and a plurality of permanent magnets 26013 and 26014 adhered to the inner surfaces of the upper and the lower yokes 26011 and 26012. An air gap is kept between the permanent magnets 26013 and 26014, in which a magnetic field is produced. The electric member composed of a coil 2603 and disposed in the air gap 2604 carries a current to interact with the magnetic field for producing a thrust. In the prior art, a precision linear guide is usually adopted to achieve non-contact sliding motion, in which a ball slide 26051 rigidly connected to the coil 2603 slides on a stationary rail 26052 with several mechanically preloaded balls 26053 in between. The repeatability of the above arrangement is quite high, however, the linear guide is considerably expensive and hard to be miniaturized. Therefore, it is impractical to apply such a scheme to portable consumer electronics based on its size and cost.

Positioning of the conventional voice coil motor mentioned above generally utilizes the closed-loop control scheme, which requires a position sensor and a proportional-differential-integral feedback controller. Although this scheme has an excellent positioning performance, the extra cost of the position sensor and the feedback controller make it less competitive as compared to the voice coil motor with open-loop displacement control, especially when applied to the cost-sensitive consumer electronics.

Voice coil motor applied to the auto-focus camera module of portable devices eventually requires short stroke and most adopts open-loop displacement control scheme, in which elastic components composed of two flat spring plates are used to produce a displacement feedback force. Fig. 27 illustrates the detailed principle. When a coil 2701 carries a current, this current will interact with the magnetic field generated by permanent magnets 2702 and a yoke 2703 and produce a thrust to accelerate the coil. The resulted displacement will produce a reverse restoring force due to the deformation of the elastic supporting branches 2704 of the spring plates.

When this reverse restoring force equals to the thrust, the coil 2701 stops accelerating and finally achieves a predetermined displacement. Moreover, if these supporting branches 2704 are equal in length and have identical elastic modulus, the coil 2701 can accomplish a parallel displacement with no tilt angle according to the parallel mechanism theory. However, the assumption of identical elastic modulus characteristic for different elastic components is too critical to achieve mass production with high yield rate. Furthermore, the aforementioned flat spring plates also require the ability to conduct electricity besides providing elastic restoring force, so current can be applied to the connected coils. The connection is usually achieved by soldering, which is even more adverse for the maintenance of an identical elastic modulus. In addition, the soldering spot lying on the elastic component is likely to fall off since the elastic component changes shape frequently.

Standard drop test is another consideration when applying voice coil motor having an elastic component to portable devices. The dropping impact angle might be different from the predetermined deformation direction of the spring plate, hence, a torsion stress on the root portion of the supporting branches 2704 will be caused due to the gravity generated by movable member of the motor. Since the flat spring plate is very thin, the root portion of supporting branches 2704 will deform permanently by such stress and hence the tilt angle during displacement will deteriorate. Therefore, the reliability against the drop test will be reduced if a thin elastic component is employed in a portable device.

The voice coil motor having an elastic component can be referred as an extremely low damping system. It should be noted that, when the thrust of the motor equals to the reverse restoring force of elastic supporting branches 2704, the voice coil motor only stops accelerating but is unable to stop at the predetermined displacement immediately. Certain period of vibration is required to deplete the residual kinetic energy for stabilization. Therefore, damping adhesive is usually added at the root portion of the supporting branches 2704 to absorb the temporary energy in order to shorten the vibration period. The filling of damping adhesive not only increases the production time and cost, the metamorphosis of damping adhesive after a long usage will also affect its absorbing performance.

## Summary of the invention

An object of the present invention is to propose a highly reliable voice coil motor with no elastic component to achieve high-repeatability open-loop displacement control, in order to overcome the difficulties caused by using the elastic component in the prior art, such as the requirement to keep identical elastic modulus to achieve parallel motion without tilt angle, the reliability consideration against drop test, and the uncertainty due to damping adhesive.

The voice coil motor of the present invention including a magnetic member and an electric member is characterized in that the electric member further comprises a ferromagnetic component besides a coil as compared to the conventional voice coil motor. The ferromagnetic component serves as a return path of a magnetic loop linking to the magnetic member composed of magnets and/or yokes to generate a normal coupling force. The normal coupling force which can be used to preload further includes suspension mechanism to eliminate tilt angle and free play during displacement. Moreover, through the design of the ferromagnetic component, a magnetic restoring force could be produced if the magnetic reluctance of the magnetic loop changes with the relative displacement between the electric member and the magnetic member. The magnetic restoring force can then be used to replace the restoring force generated by an elastic component in the prior art. Furthermore, the ferromagnetic component can further include a conductive metal sheet to increase the ohmic loss of eddy current which can increase the efficiency of depleting the temporary energy and enhance the damping characteristic. The present invention also illustrates the adjustment of magnetic restoring force coefficient, selection of no-current balance point, enhancement of the sideward rigidity, and method of using magnetic restoring force for displacement control through series of feasible embodiments.

In summary, the voice coil motor of the present invention comprises a magnetic member and an electric member. The magnetic member includes at least one magnet for producing at least one magnetic field. The electric member includes at least one coil and is arranged in the magnetic field with an air gap kept from the magnetic member for providing a thrust in at least one relative motion direction. The electric member further includes at least one ferromagnetic component arranged in a closed magnetic loop of the magnetic field and remained statically with respect to the coil. Therefore, at least one normal coupling force due to flux linkage between the ferromagnetic component and the magnetic member can be provided, and at least one magnetic restoring force could be produced upon a variation of reluctance due to a relative motion between the ferromagnetic component and the magnetic member.

In order to enhance sideward rigidity of the proposed voice coil motor, the magnetic member and the electric member can be varied as follows. At least one groove along the relative motion direction can be disposed on the surface of the magnetic member facing the electric member, and at least one groove or one hole can be disposed on the surface of the ferromagnetic component facing the magnetic member.

In order to adjust the magnetic restoring force coefficient and the no-current balance point of the proposed voice coil motor, the ferromagnetic component of the electric member can be arranged as follows. Planes with different slopes or altitudes can be disposed on the first and the second side surfaces of the ferromagnetic component parallel to the relative motion direction or on the surface of the ferromagnetic component facing the magnetic member for providing alternate minimal reluctance point and reluctance variation rate along the displacement.

In order to restrict the rolling of the movable member of the voice coil motor viewed from the axis of the relative motion direction, an additional sideward force of attractive or repulsive should be provided. The electric member of the proposed voice coil motor can be modified with the following three approaches. The ferromagnetic component of the electric member can further have an extension portion that surrounds one side of the magnetic member or the centerline of the ferromagnetic component can further be arranged not to align with the centerline of the magnetic member. Moreover, the electric member can additionally include a second ferromagnetic component or a permanent magnet disposed in the magnetic field not coupled directly with the coil.

In order to keep an air gap and a relatively parallel motion between the magnetic member and the electric member, the voice coil motor can further include a suspension member.

For short-stroke applications, the suspension member comprises a plurality of traction components, where at least two of the traction components are equal in length and parallel to form a parallel constraint structure. Each of the traction components is either made of deformable material or is a hinge having two joints.

For long-stroke applications, the suspension member comprises a plurality of grooved contact surfaces and a plurality of rollers. At least two rollers are placed between two grooved contact surfaces, in which each of the rollers has at least two contact points or two contact lines with respect to each of the grooved contact surfaces. At least two rollers are also placed between another two grooved contact surfaces, in which each of the rollers has only one contact point or one contact line with respect to one of the grooved contact surfaces.

For rotary displacement applications, the suspension member comprises two annular grooved contact surfaces and a plurality of rollers. The rollers are placed between the two annular grooved contact surfaces, in which each of the rollers has at least two contact points or two contact lines with respect to each of the annular grooved contact surfaces.

In order to generate magnetic restoring force for a voice coil motor device, the following two steps should be included: (A) providing a ferromagnetic component in a magnetic field generated by a magnetic member having at least one permanent magnet for the voice coil motor device ; and (B) fashioning the ferromagnetic component such that there is a balance point of minimal reluctance with respect to the magnetic member along the displacement direction of the voice coil motor device, and the equivalent reluctance of the closed magnetic loop will be increased when there is a relative displacement from the balance point between the ferromagnetic component and the magnetic member. The method further comprises the step of placing a conductive metal sheet in the magnetic field to enhance the damping characteristics.

The present invention also provides a method of using a magnetic restoring force to accomplish displacement control. The method of open loop scheme comprises the steps of: (A) employing a motor device having a magnetic restoring force; (B) transforming a displacement command to an equivalent current command according to the value of displacement per unit current of the motor device; and (C) passing the equivalent current command to a power amplifier electrically connected to a coil of the motor device to generate a current in the coil for providing a thrust equal to the magnetic restoring force corresponding to the displacement command.

In order to achieve close-loop absolute position control, the displacement control method can further comprises the steps of: (A) employing a position sensor to detect the real-time position of a movable member of the motor device to get an equivalent real-time position feedback; (B) applying a control algorithm having at least one integral step to an error between the displacement command and the equivalent real-time position feedback to get a position-error-compensation current command; and (C) adding the position-error-compensation current command to the equivalent current command.

In order to enhance the damping characteristic without using any damping adhesive or conductive metal sheet, the displacement control method can further comprises the steps of: (A) detecting the voltage due to back electromotive force across two ends of a coil of the motor device to get an equivalent speed feedback of a movable member of the motor device; (B) subtracting the equivalent speed feedback from a speed command equivalent to zero speed or obtained by differentiating the displacement command to get an speed error and then amplifying the speed error with a control gain to get an damping-compensation current command; and (C) adding the damping-compensation current command to the equivalent current command.

**Brief description of the drawings:**

The various objects and advantages of the present invention will be more readily understood from the following detailed description when read in conjunction with the appended drawings, in which:

Fig. 1a is a diagram of the magnetic circuit structure of a surface-magnet-type voice coil motor referring to the first embodiment of the present invention;
Fig. 1b is a diagram showing the variation of reluctance due to a displacement as compared to Fig. 1a;
Fig. 2 is a diagram of the magnetic circuit structure of a concentrated-flux-type voice coil motor referring to the second embodiment of the present invention;

Fig. 3 is a diagram of the magnetic circuit structure of a yokeless-type voice coil motor referring to the third embodiment of the present invention;
Fig. 4a is a half cross section view of a cylindrical voice coil motor with a hybrid type magnetic circuit structure referring to the fourth embodiment of the present invention;
Fig. 4b is a diagram of the magnetic circuit structure with the cylindrical magnet inserted into the cylindrical ferromagnetic component of Fig. 4a;
Fig. 4c is a diagram of the magnetic circuit structure with the cylindrical ferromagnetic component replaced by a ring type of ferromagnetic component as compared to Fig. 4a;
Fig. 5 is a diagram of the present invention showing how to offset the ferromagnetic component of the proposed voice coil motor to adjust the magnetic restoring force coefficient and the no-current balance point;
Fig. 6a is a diagram of the present invention showing that the two side surfaces of the ferromagnetic component have planes of symmetrical slopes to adjust the magnetic restoring force coefficient;
Fig. 6b is a diagram of the present invention showing that the two side surfaces of the ferromagnetic component have planes with asymmetrical slopes to adjust no-current balance point;
Fig. 6c is a diagram of the present invention showing that the two side surfaces of the ferromagnetic component have planes with different altitude to adjust the no-current balance point;
Fig. 7a is a diagram of the present invention showing that a groove or a hole is disposed on a surface of the ferromagnetic component facing the air gap to adjust the magnetic restoring force coefficient;
Fig. 7b is a diagram of the present invention showing that the centerline of the groove or hole of Fig. 7a is designed not to align with the centerline of the ferromagnetic component in order to adjust the no-current balance point;
Fig. 8a is a diagram of the present invention showing that an extruded plane is disposed on the surface of the ferromagnetic component facing the air gap and not covered by the coil in order to adjust the magnetic restoring force coefficient and the no-current balance point;
Fig. 8b is a diagram of the present invention showing that a plurality of extruded planes with different altitudes are disposed on the surface of the ferromagnetic component facing the air gap and not covered by the coil in order to adjust the magnetic restoring force coefficient and the no-current balance point;
Fig. 8c is a diagram of the present invention showing that a plurality of inclined planes with different slopes are disposed on the surface of the ferromagnetic component facing the air gap and not covered by the coil in order to adjust the magnetic restoring force coefficient and the no-current balance point;

Fig. 9 is a diagram of the suspension member for the voice coil motor of the present invention that is composed of three equal-length and parallel-arranged hinges having joints;

Fig. 10 is a diagram of the suspension member for the voice coil motor of the present invention that is composed of three equal-length and parallel-arranged wire-shaped traction components;

Fig. 11a is a diagram of the magnetic circuit structure of a surface-magnet-type voice coil motor with a relative rotary displacement referring to the first embodiment of the present invention;

Fig. 11b is a diagram showing the overlapped area between the magnetic and the electric members of the magnetic circuit structure of Fig. 11a;

Fig. 12a is a diagram of the magnetic circuit structure with both the magnets and the ferromagnetic component having grooves along the displacement direction as compared to Fig. 11 a;

Fig. 12b is a diagram showing the overlapped area variation as compared to Fig. 11b;

Fig. 13 is a diagram of the suspension member of the voice coil motor of the present invention that is composed of two parallel constraint structures arranged with a certain angle in between;

Fig. 14 is a diagram showing that a relative rotary displacement with the displacement direction as the axis will happen when applied by an interference force to the suspension member of Fig. 13;

Fig. 15 is a diagram showing that the electric member of the voice coil motor of the present invention has an extension portion that surrounds one side of the magnetic member in order to produce an attractive force perpendicular to the displacement direction;

Fig. 16 is a diagram showing that the electric member of the voice coil motor of the present invention has an additional ferromagnetic component disposed on one side of the magnetic member in order to produce an attractive force perpendicular to the displacement direction;

Fig. 17 is a diagram showing that the electric member of the voice coil motor of the present invention has an additional magnet disposed on one side of the magnetic member in order to produce an attractive force perpendicular to the displacement direction;

Fig. 18 is a diagram showing that the ferromagnetic component of the electric member of the voice coil motor of the present invention is offset relative to the centerline of the coil in order to produce a sideward preloading force;

Fig. 19 is a diagram of the suspension member of the voice coil motor of the present invention that employs a rolling contact structure;

Fig. 20 is a diagram of the suspension member of the voice coil motor of the present invention that employs an annular rolling contact structure for rotary application;

Fig. 21 is a block diagram for illustrating the displacement control method of the present invention;

Fig. 22 is a 3D view of the proposed voice coil motor for pickup head of a CD-ROM or DVD player that achieves two-degrees-of-freedom motion and open-loop displacement control, in accordance with one optimal embodiment of the present invention;

Fig. 23 is a 3D view of the proposed voice coil motor for auto-focus camera module embedded in a notebook PC or a mobile phone which possesses minimal cubic volume with flat electric member and can achieve open-loop displacement control, in accordance with one optimal embodiment of the present invention;

Fig. 24 is a 3D view of the proposed voice coil motor for auto-focus camera module embedded in a notebook PC or a mobile phone that possesses minimal cubic volume with cylindrical electric member and can achieve open-loop displacement control, in accordance with one optimal embodiment of the present invention;

Fig. 25 is a 3D view of the proposed voice coil motor for high-end auto-focus camera module of a mobile phone that possesses a suspension member of rolling contact structure and can achieve close-loop displacement control by employing a position sensor, in accordance with one optimal embodiment of the present invention;

Fig. 26 is a structure diagram of a conventional voice coil motor that adopts a linear guide; and

Fig. 27 is a schematic diagram of a conventional voice coil motor that adopts elastic component to balance the thrust of the coil current to achieving open-loop displacement control.

## Detailed description of the preferred embodiments

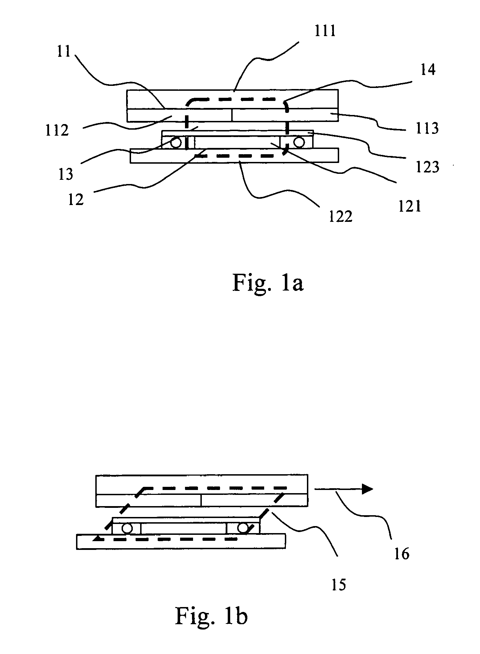

As known from the prior art illustrated above, the movable member of the conventional voice coil motor composed a simple coil only. Therefore, besides the thrust between the movable member and the stationary member along the displacement direction, there is no other coupling force. As shown in Fig. 1a, the voice coil motor of the present invention comprises a magnetic member 11 and an electric member 12. The magnetic member 11 has a yoke 111 and two magnets 112 and 113. The first magnet 112 and the second magnet 113 with opposite polarities downward are adhered to the lower surface of the yoke 111. The electric member 12 not only has a coil 121 but also a ferromagnetic component 122 where both of them are rigidly joined together. An air gap 13 is kept between the magnetic member 11 and the electric member 12. The ferromagnetic component 122 works as the return path of the magnetic field generated by the magnetic member 11 to form a closed magnetic loop 14. Due to the flux linkage of the closed magnetic loop 14, a normal coupling force (i.e., an attractive force) will be generated between the magnetic member 11 and the electric member 12. In addition, when there is a relative displacement between the magnetic member 11 and the electric member 12 along the arrow direction 16, as shown in Fig. 1b, the path of the closed magnetic loop 15 becomes longer than that of Fig. 1a, hence increasing the reluctance. However, the magnetic circuit system has the tendency of restoring itself to a stable balance point of a minimal reluctance, therefore, a restoring force is then produced to restore the voice coil motor from the state of Fig. 1b to that of Fig. 1a. The restoring force will get stronger as the displacement from the stable balance point gets larger, , their relationship is eventually linear. As compared to the repulsive force generated by two permanent magnets which is inversely proportional to the square of gap length and has no stable balance point, this restoring force is more similar to a spring. Therefore, this restoring force can be referred as a magnetic spring force. The magnetic restoring force can be certainly designed to be negligible under the condition that if there is no variation of reluctance with displacement, for example, the length of the ferromagnetic component 122 is designed to be much longer than that of the magnetic member 11.

When the coil 121 carries a current, the current will interact with the magnetic field to produce a thrust. The magnetic member 11 and the electric member 12 will start to accelerate in opposite directions and result in a relative displacement by this thrust. When the magnetic restoring force generated by the displacement is equal to the thrust, the magnetic member 11 and electric member 12 will stop accelerating. If the voice coil motor has a certain damping effect to deplete the residual kinetic energy and finally stabilizes with a relative displacement, the coil current can then be used to control displacement without any position sensor or elastic component.

In order to deplete the residual kinetic energy mentioned above, the electric member 12 of the voice coil motor of the present invention can further combine a conductive metal sheet 123 with good conductivity such as copper, aluminum or silver in the magnetic field 14 generated by the magnetic member 11. When the reluctance variation of the magnetic field 14 due to the displacement makes the magnetic flux linkage to change with time during acceleration, based on the Lenz's law, this time-varying magnetic flux will substantially induce the eddy current in the conductive metal sheet 123. The resulted ohmic loss of the eddy current will in turn enhance the damping characteristic. As a result, the displacement characteristic with a certain damping capability can be realized without using any damping adhesive.

After understanding the basic operation principle of the voice coil motor of the present invention, four feasible embodiments will be proposed below.

The first magnetic circuit structure is the surface magnet type structure described above.

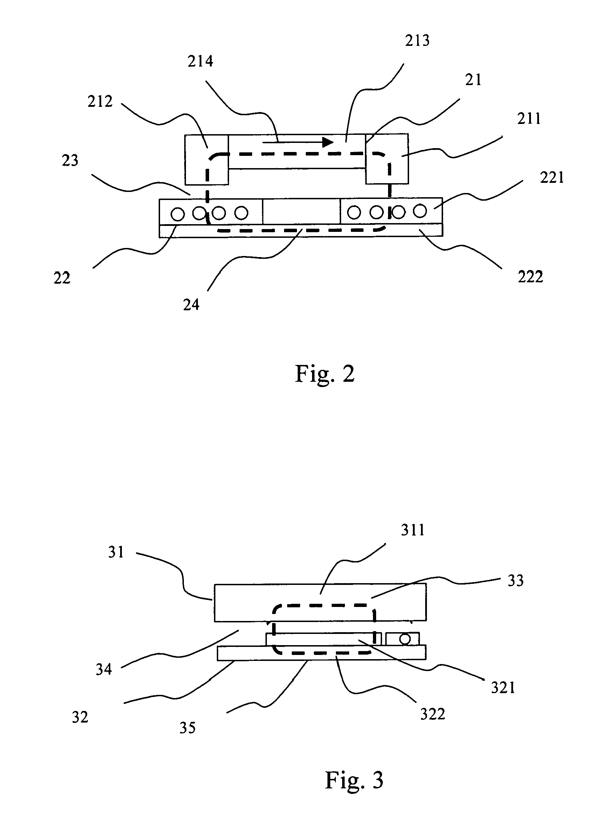

The second magnetic circuit structure is the concentrated flux type. As shown in Fig. 2, a magnetic member 21 has a first yoke 211 and a second yoke 212 adhered to two surfaces of opposite polarities of a magnet 213 respectively. The magnet 213 is magnetized along an arrow direction 214. An electric member 22 has a coil 221 and a ferromagnetic component 222 where both are rigidly joined together. An air gap 23 exists between the magnetic member 21 and the electric member 22. In principle, this embodiment differs from the previous embodiment in that the magnetic member 21 replaces the magnetic member 11 of Fig. 1a. Similarly, the magnetic field forms a closed magnetic loop 24.

The third magnetic circuit structure is the yokeless type. As shown in Fig. 3, a magnetic member 31 has only one polar anisotropic magnet 311 to replace the magnetic member of Fig. 1a or Fig. 2, and an electric member 32 has a coil 321 and a ferromagnetic component 322 which are rigidly joined together. An air gap 34 exists between the magnetic member 31 and the electric member 32. The polar anisotropic magnet 311 is characterized in that it can form two magnet poles of opposite polarities on the surface of the magnetic member 31 facing the electric member 32. The magnetic flux line between two poles of opposite polarities does not need to pass an external yoke, but passes an arc 33 inside the magnet instead. Similarly, a magnetic field of this magnetic circuit structure forms a closed magnetic loop 35.

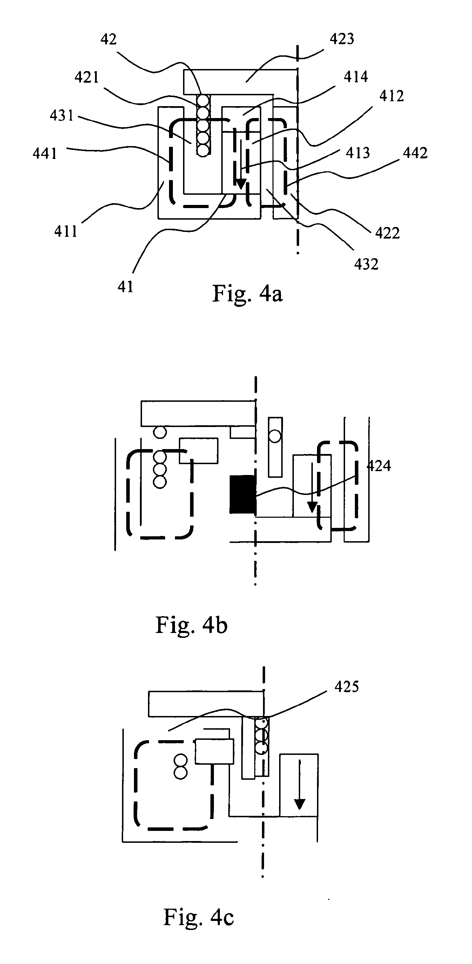

The fourth magnetic circuit structure is the hybrid type. Fig. 4 shows half of the cross section view of a cylindrical voice coil motor. The magnetic member 41 has a cylindrical yoke 411 with a L-shaped cross section, a ring magnet 412 magnetized along an arrow direction 413, and a ring yoke 414. An electric member 42 has a coil 421 and also a cylindrical ferromagnetic component 422, which are joined together via a rigid body 423. A first air gap 431 and a second air gap 432 exist between the magnetic member 41 and the electric member 42. This magnetic circuit structure has a first magnetic field 441 and a second magnetic field 442. This magnetic circuit is characterized in that the coil 421 relative to the magnetic member 41 is the magnetic circuit structure of the conventional voice coil motor, while the ferromagnetic component 422 relative to the magnetic member 41 is the real mechanism for producing a magnetic restoring force. In the above magnetic member 41 of the voice coil motor, a cylindrical magnet 424 having a polarity of opposition to that of the ring magnet 412 can be inserted into the center of the cylindrical ferromagnetic component 422 to increase the strength of the second magnetic field 442 as shown in Fig. 4b. The cylindrical ferromagnetic component 422 can also be replaced by a ring ferromagnetic component 425, which is joined with the coil 421 and directly placed in the magnetic loop of the first magnetic field 441 as shown in Fig. 4c.

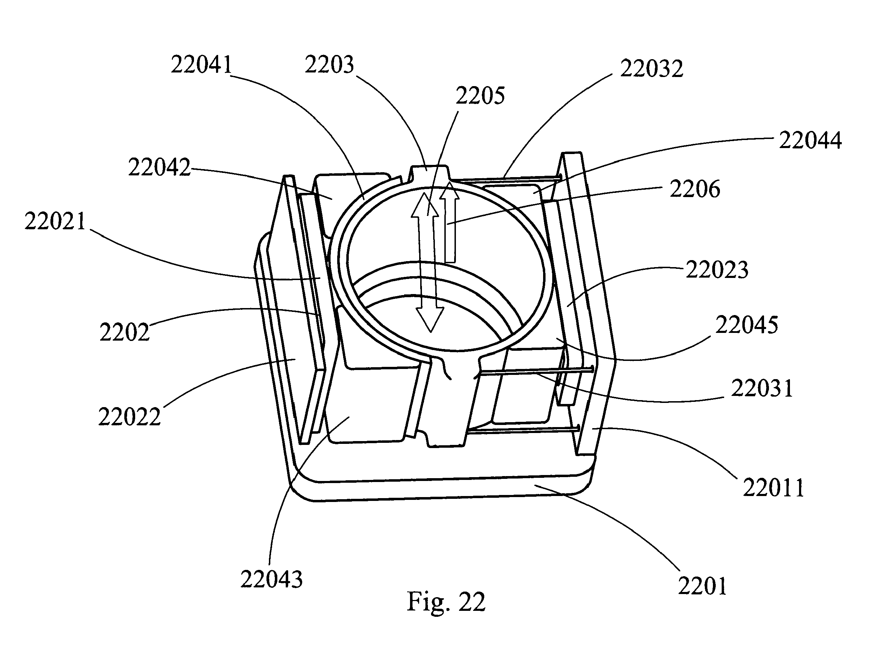

The four magnetic circuit structures mentioned above are proposed only for illustration purposes in order to disclose the embodiments of the present invention. For those of ordinary skill in the art, the above conceptss can be further used to obtain different magnetic structures. As shown in Figs. 22 to 24, a plurality of magnetic members can be placed at four corners of a circle to enhance the space utility, and the electric member can be placed on the external plane or the inner circular plane of the magnetic member. As shown in Fig. 4b, a magnet can be added to the electric member of the four magnetic circuit structures mentioned above to strengthen the magnetic field. No matter how the shape is changed, the magnetic circuit structure of the voice coil motor of the present invention must have the following characteristics. The magnetic circuit requires at least one magnet in order to produce at least one magnetic field. The magnetic field can be conducted by the magnet itself or by an additional yoke so that at least two magnetic pole surfaces with opposite polarities can be formed on the surface of the magnetic member facing the electric member and adjacent to the air gap. Moreover, the electric member includes at least one coil and at least one ferromagnetic component where both are stationary with each other, and at least an air gap is kept from the magnetic member. The coil is placed in the magnetic field and carries a current to interact with the magnetic field to produce a thrust. The ferromagnetic component is placed in a closed magnetic loop of the magnetic field to produce at least one normal coupling force relative to the magnetic member. When the reluctance of the closed magnetic loop changes with displacement, a magnetic restoring force can be generated. Through the balance between the thrust and the magnetic restoring force, open-loop displacement control can be achieved.

Regard of what the magnetic circuit structure is, the magnetic member and the electric member of the voice coil motor described above have almost the same mass. The magnetic member can be stationary while the electric member is movable, or the magnetic member can be movable while the electric member is stationary.

Seeing that the ferromagnetic component can produce a magnetic restoring force with displacement, as a result, the balance point of minimal reluctance and the reluctance change rate of the magnetic circuit can be used effectively to adjust the no-current balance point and the magnetic restoring force coefficient. This will be exemplified in detail with several feasible embodiments below.

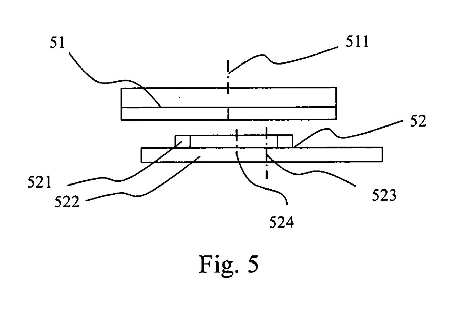

As shown in Fig. 5, the electric member 52 includes a coil 521 and a ferromagnetic component 522. The centerline 523 of the ferromagnetic component 522 is offset with respect to the centerline 524 of the coil 521. Under this circumstance, the centerline 511 of the magnetic member 51 will align with the centerline 523 of the ferromagnetic component 522 to achieve the minimal reluctance, therefore, the no-current balance point can be adjusted by changing the offset.

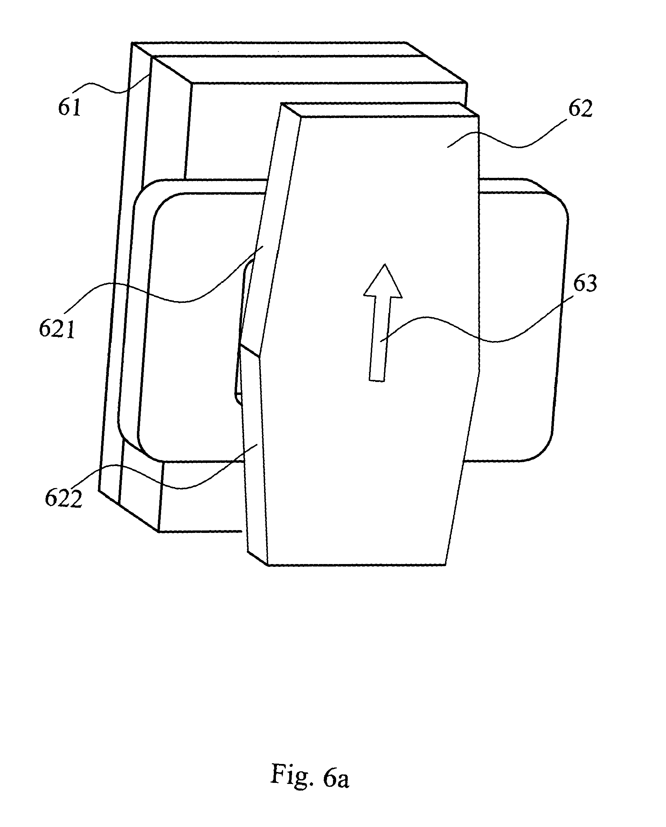

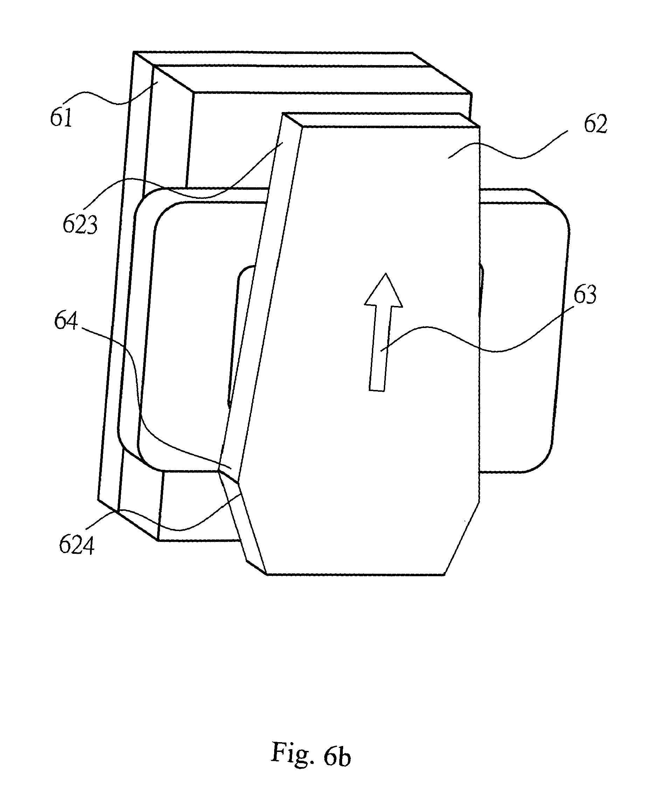

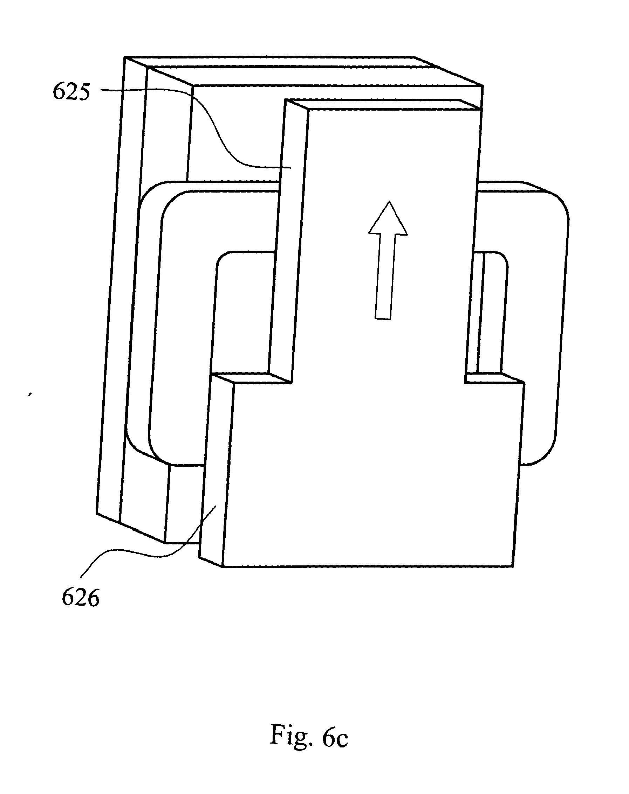

As shown in Fig. 6a, two inclined planes with same slopes 621 and 622 are disposed at two ends of each vertical side surface of a ferromagnetic component 62 to change the reluctance along a parallel displacement direction 63 with respect to a magnetic member 61. When the slopes of the two planes 621 and 622 change, the magnetic restoring force coefficient can be adjusted. The larger the slope, the larger the magnetic restoring force coefficient. As shown in Fig. 6b, if the above two planes 621 and 622 are replaced with two asymmetric planes 623 and 624, the centerline of the magnetic member 61 will shift toward a slope turn point 64 to maximize the flux linkage in order to achieve the minimal reluctance, hence being able to change the no-current balance point. As shown in Fig. 6c, the two planes 621 and 622 can be replaced with two flat planes of different altitude 625 and 626 as well, which can effectively adjust the no-current balance point and the magnetic restoring force coefficient.

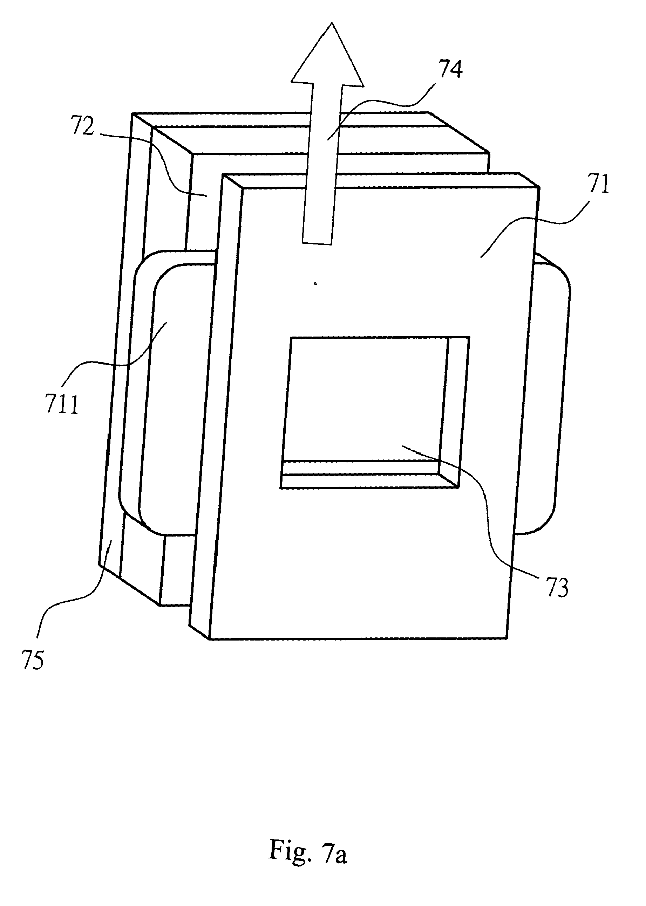

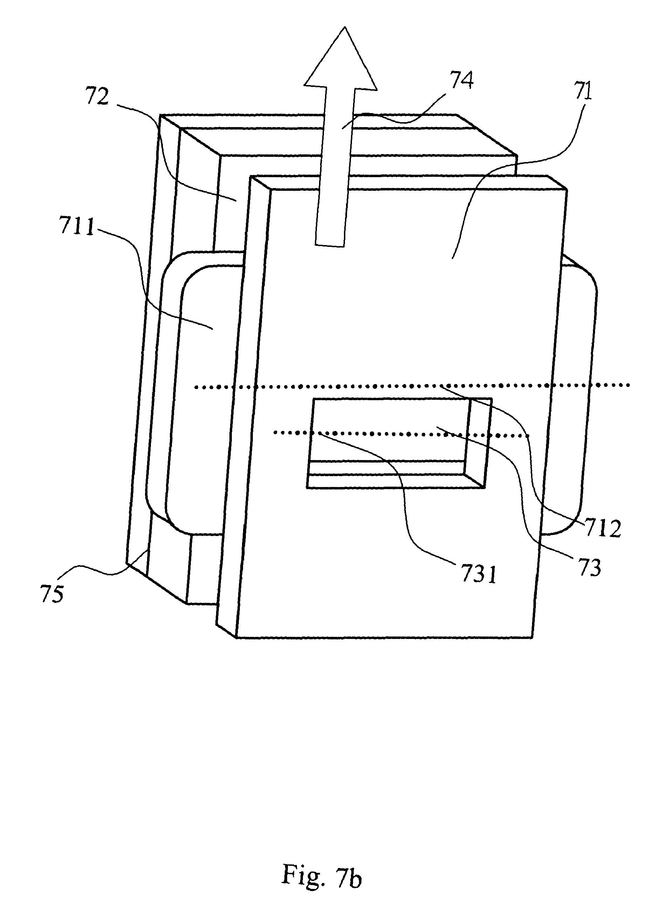

As shown in Fig. 7a, the electric member consists of a ferromagnetic component 71 and a coil 711. At least one groove or one hole 73 can be disposed on the surface of a ferromagnetic component 71 facing an air gap 72. When the width of the groove or the hole 73 changes along the displacement direction 74, the magnetic restoring force coefficient can be adjusted. Similarly, as shown in Fig. 7b, when the centerline 731 of the groove or the hole 73 does not align with the centerline 712 of the ferromagnetic component 71, the centerline of the magnetic member 75 will stay somewhere between the centerline 731 of the groove or the hole 73 and the centerline 712 of the ferromagnetic component 71 to accomplish the minimal reluctance, hence being able to change the no-current balance point.

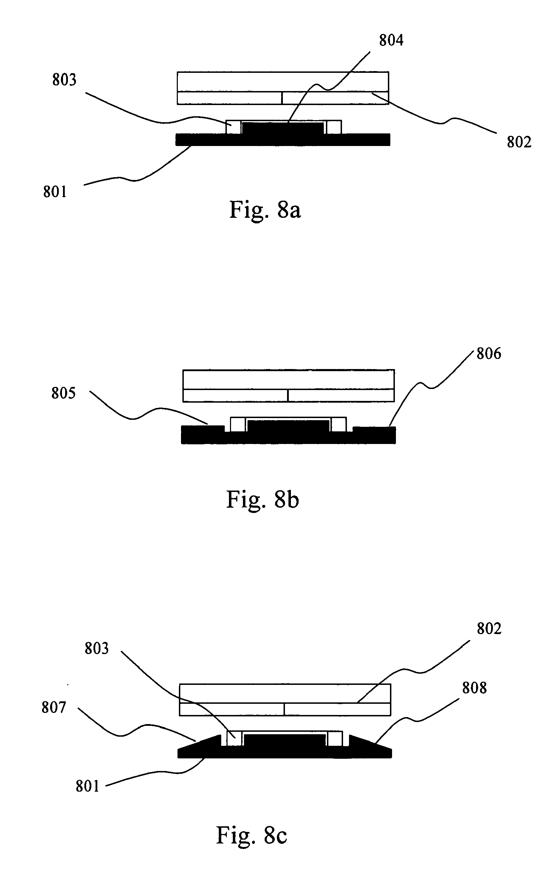

As shown in Fig. 8a, an extruded plane 804 can be disposed on the surface of a ferromagnetic component 801 facing a magnetic member 802 and not covered by a coil 803. When the width of the extruded plane 804 changes, the magnetic restoring force coefficient can be adjusted. Similarly, when the centerline of the extruded plane 804 does not align with the centerline of the ferromagnetic component 801, the centerline of the magnetic member 802 will stay somewhere between the centerline of the extruded plane 804 and the centerline of the ferromagnetic component 801 to achieve the minimal reluctance, hence being able to change the no-current balance point. As shown in Fig. 8b, two extruded planes 805 and 806 can also be added to adjust the magnetic restoring force coefficient. Obviously, if the two extruded planes 805 and 806 have different altitudes, the no-current balance point will be changed relatively. As shown in Fig. 8c, two inclined planes 807 and 808 can be disposed on the surface of the ferromagnetic component 801 facing the magnetic member 802 and not covered by the coil 803. Changing the slopes of these two inclined planes will change the gradient of the reluctance variation, which results in the possibility of adjusting the magnetic restoring force coefficient. Similarly, if the two inclined surfaces 807 and 808 have different slopes, the no-current balance point can be adjusted.

As stated above, the voice coil motor of the present invention has a normal coupling force between the surfaces of the magnetic member and the electric member. In order to resist this normal coupling force to keep the air gap, the voice coil motor can further comprises a suspension member. This normal coupling force can then be used to preload the suspension member to eliminate the free play and attain a high-repeatability displacement characteristic. Several feasible embodiments will be illustrated in detail below.

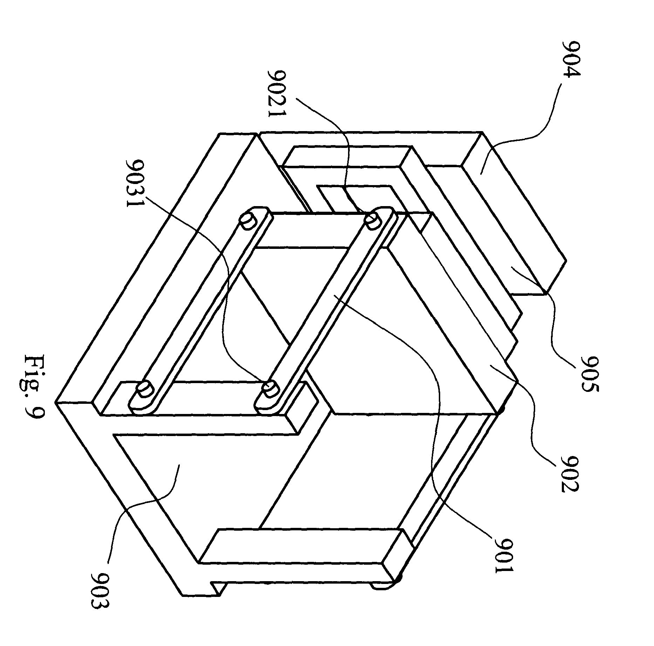

When the application of the voice coil motor of the present invention demands short stroke only, such as miniaturized automatic focus camera module with a displacement smaller than 0.5 mm, the most basic approach is based on the parallel mechanism theory. As shown in Fig. 9, a suspension member is composed of three hinges 901. At least two of the hinges 901 are equal in length and parallelly arranged to form a parallel constraint structure. In this embodiment, the electric member 904 including a base 903 is stationary. There is a plurality of shafts disposed on the base 903. The magnetic member 902 of the voice coil motor is movable, where a plurality of shafts 9021 is also disposed. One joint of each hinge 901 is rotationally connected with one of the shafts 9021 located on the magnetic member 902, while the other joint is rotationally connected with one of the shafts 9031 on the base 903. The inner diameter of the joint is slightly larger than the outer diameter of the shafts 9021. Because there is a normal attractive force between the electric member 904 and the magnetic member 902, the free play between the joint and the shaft can be eliminated, while keeping the air gap 905 between the magnetic member 902 and the electric member 904. Because two of the hinges 901 are of equal length and parallel, the magnetic member 902 should obey the parallel mechanism theory in order to accomplish a high-repeatability parallel displacement relative to the electric member 904. The ring-shaped joints of this embodiment are only for illustration purposes as they definitely can be substituted with spherical joints or arc-shaped joints. The only requirement is to have the joints be freely and rotatably connected with the magnetic member or the electric member regardless of which kind of joints are used.

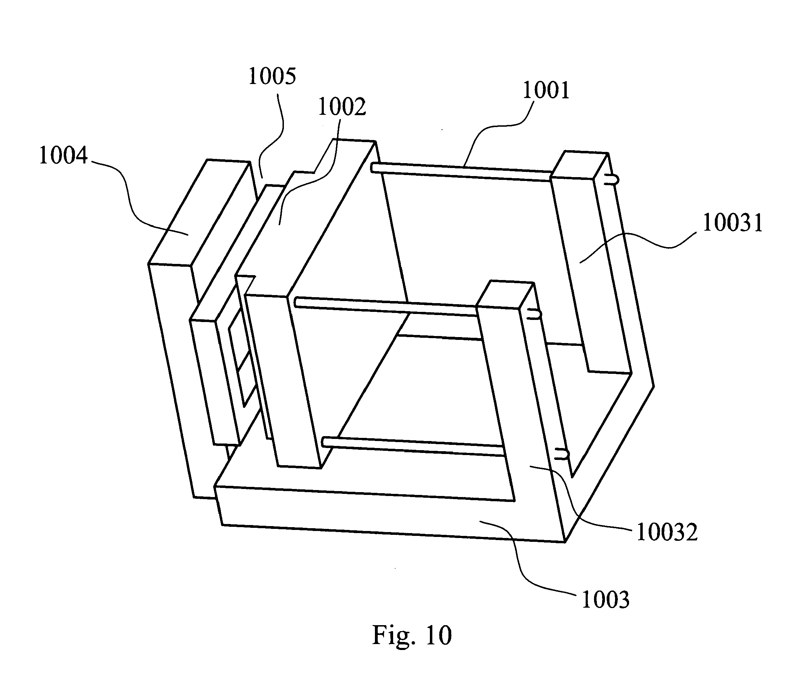

The hinges employed in the previous embodiment are still a little bit large as applied to the miniaturized voice coil motor. In the following embodiment, the above hinges are replaced with wire-shaped traction components. As shown in Fig. 10, a suspension member is composed of three wire-shaped traction components 1001. One end of each wire-shaped traction component 1001 is rigidly connected with the magnetic member 1002 of the voice coil motor, while the other end is rigidly connected with the vertical posts 10031 and 10032 located on a base 1003. These three wire-shaped traction components 1001 are made of soft material which would deform freely, hence, such a mechanism has no suspension function if there is no external force to drag them. The attractive force between the electric member 1004 and the magnetic member 1002 can then be adopted to erect these three wire-shaped traction components 1001, while keeping an air gap 1005 between the magnetic member 1002 and the electric member 1004. Since at least two of the wire-shaped traction components 1001 are equal in length and parallel, the magnetic member 1002 should perform a frictionless and parallel displacement with respect to the electric member 1004.

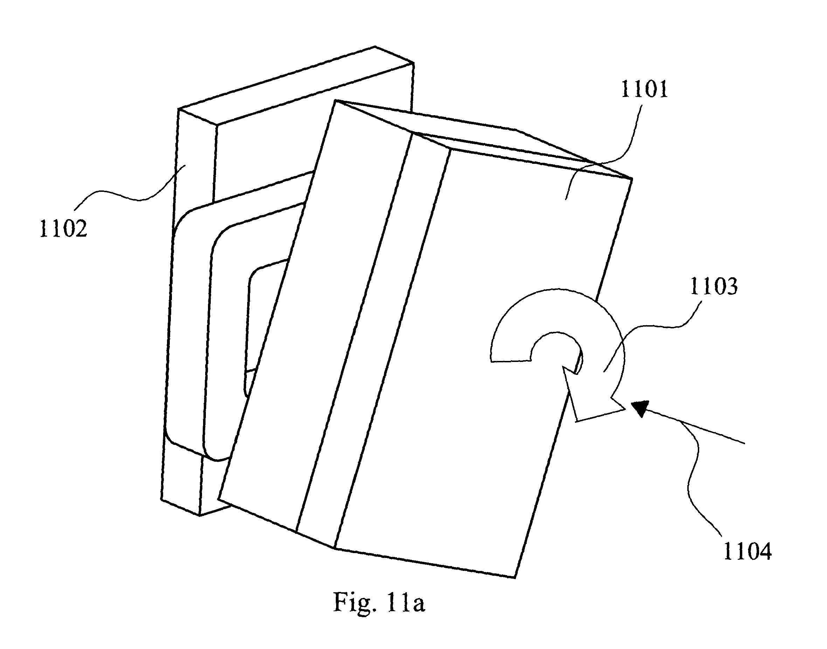

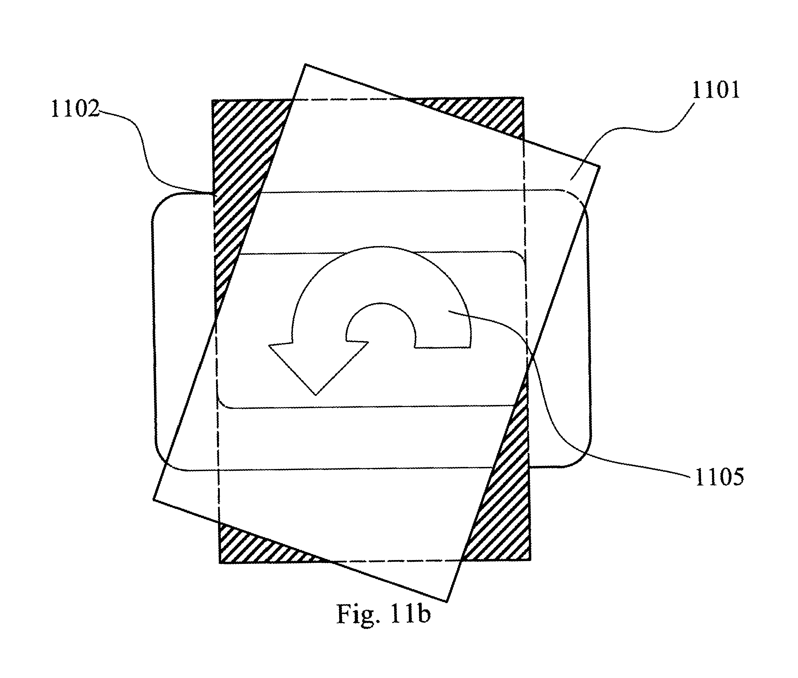

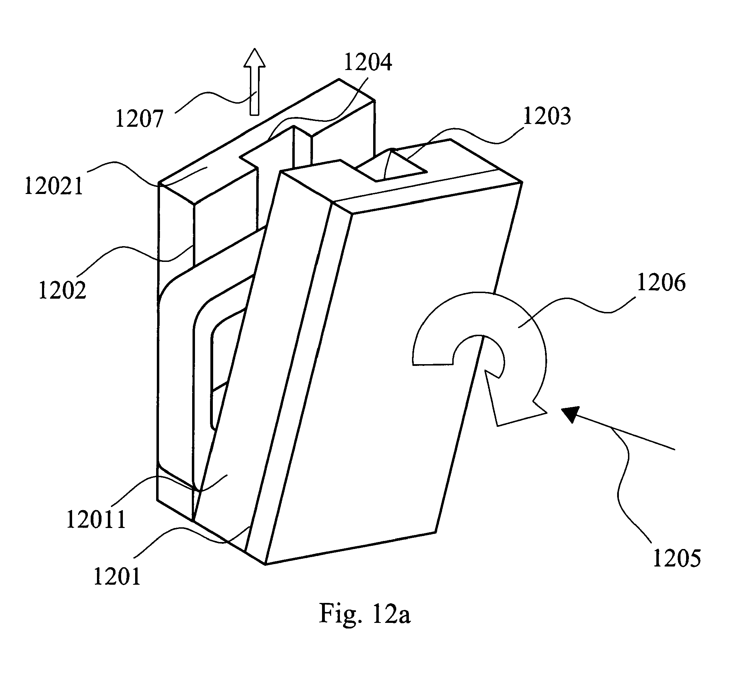

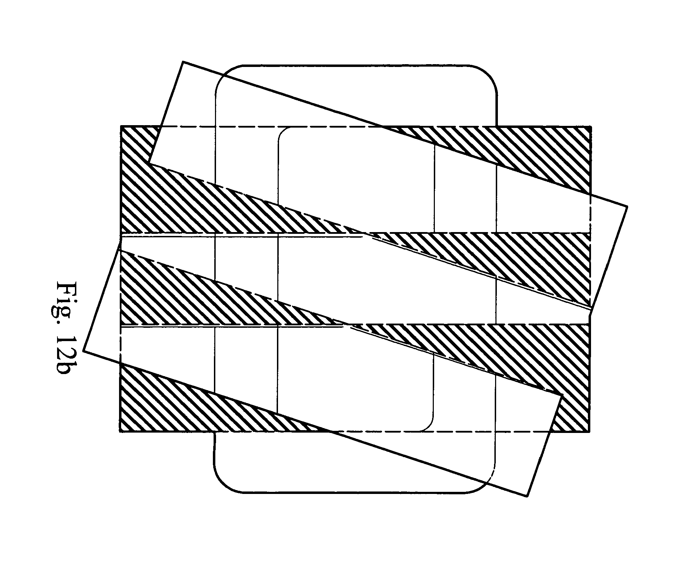

As shown in Fig. 11a, noted that the magnetic member 1002 might rotate temporarily with respect to the electric member 1004 along the arrow direction 1103 as the three wire-shaped traction components are employed in the previous embodiment. This rotary displacement will results in a tilt angle between motion axis and the optical axis, which is not acceptable for the voice coil motor which applied to optical imaging systems. Therefore, it is necessary to illustrate the method of suppressing this temporary relative rotary displacement. As viewed from the direction of the arrow 1104, when there is a relative rotary displacement between the magnetic member 1101 and the electric member 1102 (as shown in Fig. 11b), the overlapped area of the two members adjacent to the air gap decreases (because the shaded area is taken off) and the reluctance thus increases. This will results in a magnetic restoring torque 1105, thereby the magnetic member 1101 and the electric member 1102 will restore to the aligned state. In order to suppress this temporary relative rotary displacement effectively, this magnetic restoring torque has to be reinforced. The surface-magnet-type magnetic circuit structure is used as an example for illustration. As shown in Fig. 12a, at least a groove 1203 along the parallel relative motion direction 1207 can be disposed on two magnetic pole surfaces of the magnet 12011 of the magnetic member 1201 facing the electric member 1202, and/or at least a groove 1204 along the parallel relative motion direction 1207 can be disposed on the surface of the ferromagnetic component 12021 of the electric member 1202 facing the magnetic member 1201. The groove can be replaced with a slot or a hole. As viewed from the direction of the arrow 1205, when there is a relative rotary displacement along the arrow direction 1206 between the magnetic member 1201 and the electric member 1202 (as shown in Fig. 12b), the non-overlapped area becomes twice as compared to that of Fig. 11b, and the magnetic restoring torque thus doubled. Consequently, the stiffness along the arrow direction 1206 of temporary relative rotary displacement will be enhanced and thus suppress the tilt angle.

The approach above uses the surface-magnet-type magnetic circuit structure as an example. This design concept can also be intuitively applied to other magnetic circuit structures mentioned previously.

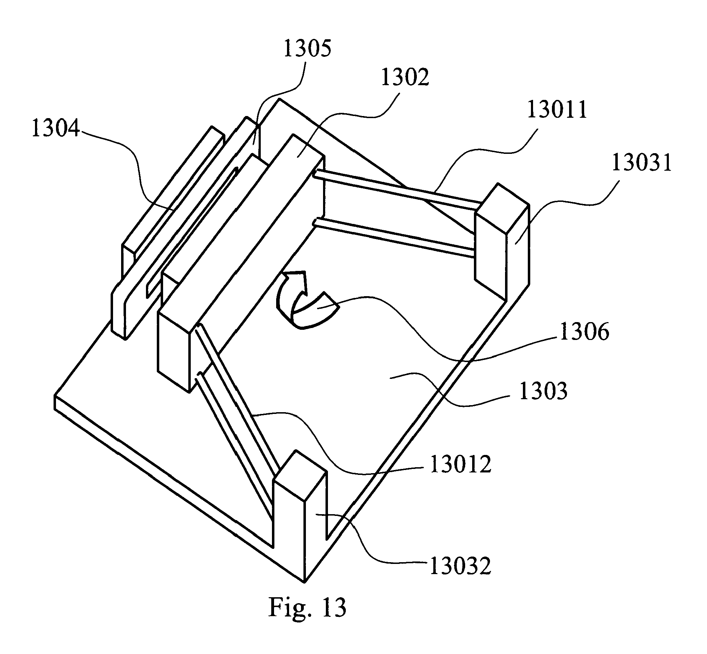

If the tilt angle needs to be removed thoroughly, we should further improve the suspension member. The simplest approach is shown in Fig. 13a. A suspension member includes a first parallel constraint structure 13011 and a second parallel constraint structure 13012 arranged with a certain angle in between, which indicates that these two constraint structures are not parallel with each other. Each of the parallel constraint structures is composed of at least two wire-shaped traction components that are equal length in and parallel. One end of each wire-shaped traction component is rigidly connected to the magnetic member 1302 of the voice coil motor, while the other end is rigidly connected to vertical posts 13031 and 13032 of a base 1303. Same as Fig. 10, the attractive force between the electric member 1304 and the magnetic member 1302 can be used to erect all the wire-shaped traction components, while maintaining an air gap 1305 between the magnetic member 1302 and the electric member 1304. According to the geometry analysis for such suspension member, the degree of freedom along the tilt anglerotation axis 1306 will be totally constrained. Moreover, since all the wire-shaped traction components are of equal length, the magnetic member 1302 should make a frictionless and parallel displacement without any tilt angle with respect to the electric member 1304.

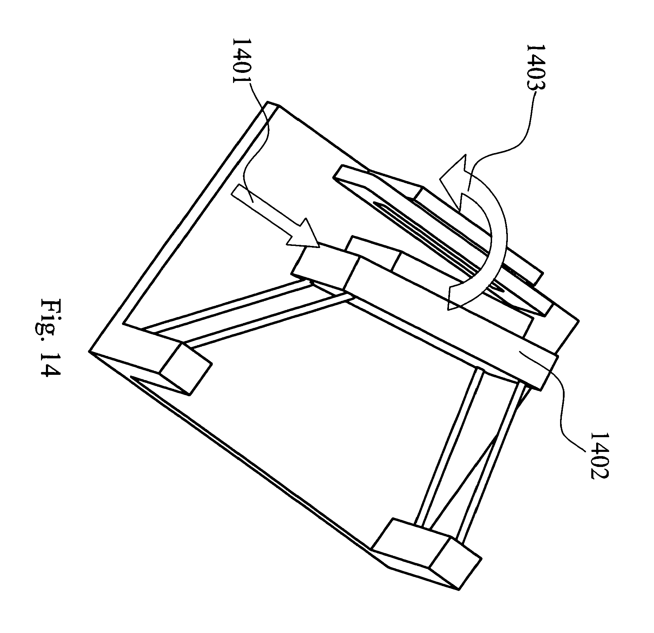

The above suspension member using two parallel constrain structures arranged with a certain angle in between can successfully eliminate the tilt angle. However, as shown in Fig. 14, if an interference force is applied along the arrow direction 1401, the magnetic member 1402 will deviate in the arrow direction 1401, leading to a relative rotary displacement along the arrow direction 1403. This relative rotary displacement is considered as a temporary displacement. When the interference force disappears, the original parallel state can be restored because of the minimal reluctance effect. Such a temporary relative rotary displacement will not result in any tilt angle between motion axis and optical axis so that partially blurred phenomenon will not occur on an optical imaging device, it only changes the range of visible image. Therefore, such suspension member can apply to static applications such as notebook PC or desktop camera modules.

When the voice coil motor of the present invention is applied to a portable device such as camera module of a mobile phone, since the portable device is subject to shock and vibration disturbance, the above temporary relative rotary displacement has to be restrained. Several embodiments below are proposed by modifying the electric member of the voice coil motor to additionally provide a sideward preloading force and by providing an additional wire-shaped traction component to resist the sideward preloading force in order to enhance the stiffness along this rotary displacement direction.

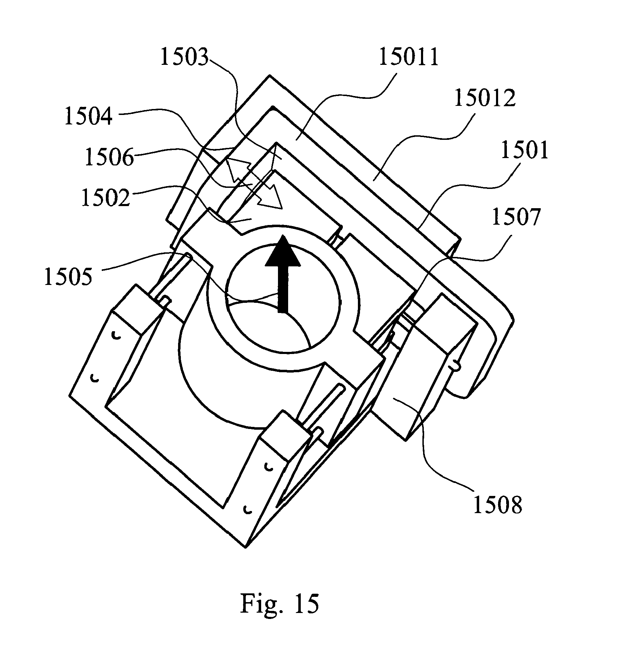

As shown in Fig. 15, an electric member 1501 consisting of a coil 15011 and a ferromagnetic component 15012 is modified to possess an extension portion 1504 surrounding one side of a magnetic member 1502, where an air gap 1503 is kept between the this extension portion 1504 and the magnetic member 1502. Since the extension portion 1504 has sideward magnetic flux linkage with the magnetic member 1502, an attractive force 1506 perpendicular to a displacement direction 1505 is produced. To resist the attraction force 1506 and maintain the air gap 1503, an additional wire-shaped traction component 1507 is provided with one end fixed to the magnetic member 1502, and the other end fixed to a vertical post 1508 at the opposite side of the extension portion 1504.

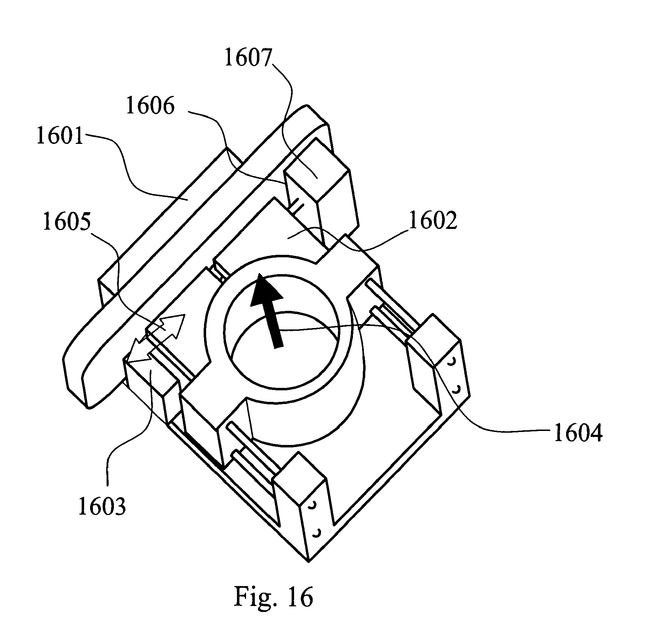

As shown in Fig. 16, an electric member 1601 can further comprise an additional ferromagnetic component 1603 disposed on one side of a magnetic member 1602. The ferromagnetic component 1603 replaces the extension portion 1504 of Fig. 15 to produce an attractive force 1605 perpendicular to a displacement direction 1604. Same as the previous embodiment, an additional wire-shaped traction component 1606 is provided with one end fixed to the magnetic member 1602, and the other end fixed to a vertical post 1607 at the opposite side of the additional ferromagnetic component 1603.

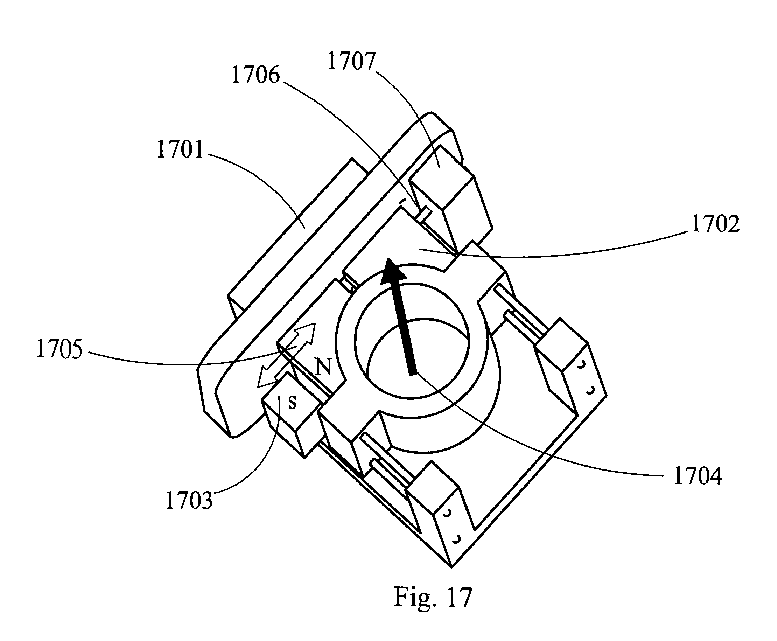

As shown in Fig. 17, an electric member 1701 can further comprise an additional permanent magnet 1703 disposed on one side of a magnetic member 1702. The permanent magnet 1703 replaces the ferromagnetic component 1603 of Fig. 16 to produce a normal attractive force 1705 perpendicular to a displacement direction 1704. Same, an additional wire-shaped traction component 1706 is provided with one end fixed to the magnetic member 1702, and the other end fixed to a vertical post 1707 at the opposite side of the additional permanent magnet 1703.

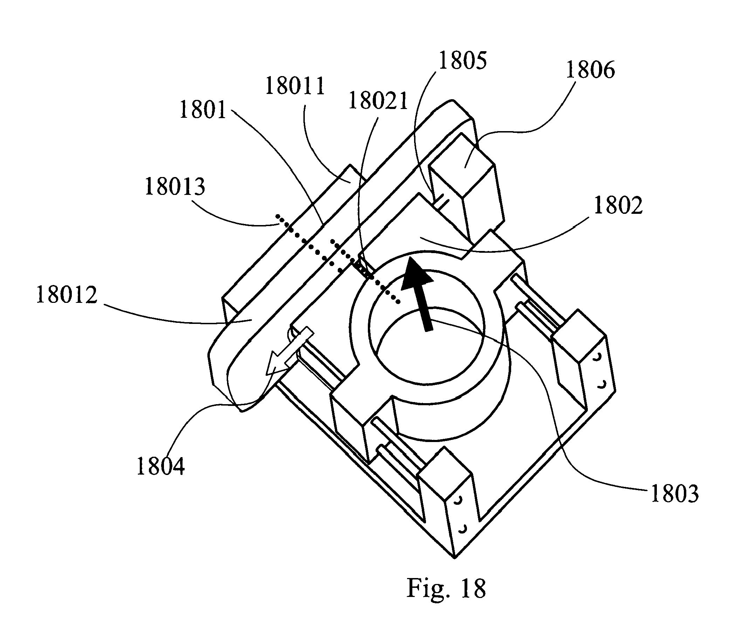

As shown in Fig. 18, without adding any extra component to the electric member 1801, the simplest way is to offset the centerline 18013 of a ferromagnetic component 18011 with respect to the centerline of a coil 18012. Due to this offset, a sideward restoring force 1804 perpendicular to a displacement direction 1803 is produced because of the minimal reluctance effect. Same as the previous illustrations, an additional wire-shaped traction component 1805 is provided with one end fixed to the magnetic member 1802, and the other end fixed to a vertical post 1806 at the opposite side relative to the offset.

The above wire-shaped traction component are only used for illustration purpose as they can be replaced with sheet-shaped or leaf-shaped traction components. The material of the traction components is not limited to metal wire. It should be noted that, if the electric member of the voice coil motor is left stationary, the traction component could use the non-conductive fiber wire, because no flexible power line is required for supplying the current to the coil. Particularly, a wire formed by joining several chemical fibers, such as KEVLAR®, would possess a good damping characteristic and could tolerate very high impact force without breaking or deforming permanently. The reliability will be greatly enhanced by using such material. As a consequence, the selection of the material for traction components needs to ensure that the material has low ductility along the direction of the normal coupling force and is soft enough so that it can deform freely. Similarly, the suspension schemes disclosed above are used for illustration purposes only. For those of ordinary skill in the art, the above ideas can be used to obtain different collocations such as those proposed later in the optimal embodiments for automatic focus camera modules. Consequently, the structure of the suspension member proposed is characterized in that it should comprise a plurality of traction components and at least two of the traction components are of equal length and parallel to form a parallel constraint structure.

When the applications of the proposed voice coil motor require a longer stroke, the structures of the suspension member mentioned above are no longer suitable, because too much displacement will lead to considerable increment of air gap. Moreover, when the proposed voice coil motor is applied to optical systems having several lens groups such as zoom lens system, it is necessary to align the optical axes of these lens groups. The aforementioned structures again will not be adequate, because unequal displacement of the lens groups will offset the optical axes. Therefore, new structures of suspension member are proposed in the following embodiments.

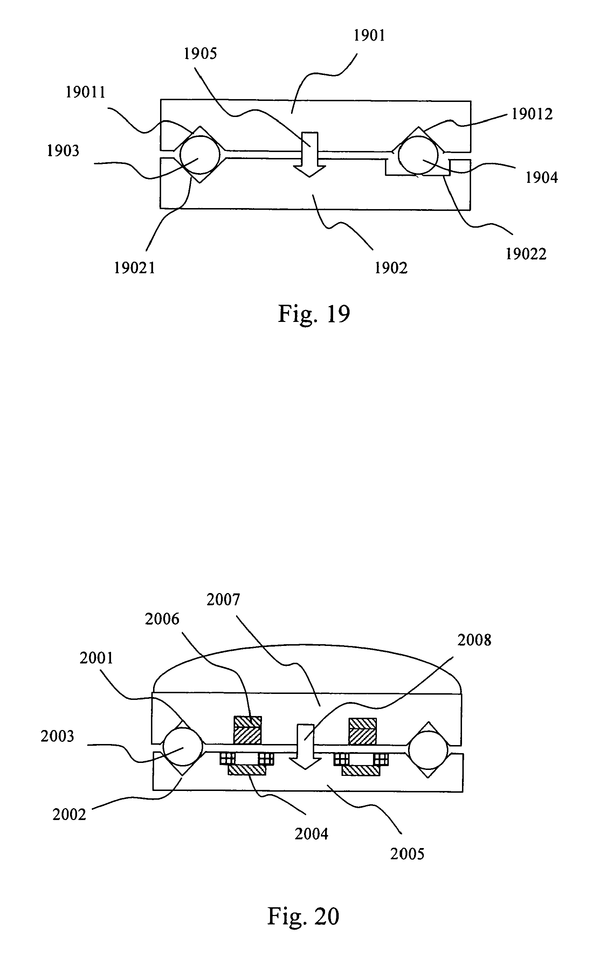

As shown in Fig. 19, the suspension member is a rolling contact structure. The suspension member comprises a first and a second grooved contact surfaces 19011, 19012 disposed on a movable member 1901. For illustration purpose, both the grooved contact surfaces are exemplified with angle-shaped grooves. The suspension member further comprises the third and the fourth grooved contact surfaces 19021, 19022 disposed on a stationary member 1902. For illustration purpose, the third grooved contact surface 19021 is exemplified with an angle-shaped groove, while the fourth grooved contact surface 19022 is exemplified with a flat-bottomed groove. At least two rollers 1903 are placed between the first grooved contact surface 19011 and the third grooved contact surface 19021, and at least two rollers 1904 are placed between the second grooved contact surface 19012 and the fourth grooved contact surface 19022. These rollers are exemplified with spherical balls. Since the movable member 1901 and stationary member 1902 are either magnetic member or electric member, there should be a normal coupling force 1905 in between to clamp the rollers. Obviously, each of the rollers 1903, 1904 has two contact points with the first grooved contact surface 19011, the second grooved contact surface 19012, and the third grooved contact surface 19021. However, each of the rollers 1904 has only one contact point with the fourth grooved contact surface 19022. Therefore, the counterforce induced at the two-point-contact location has a component perpendicular to the normal coupling force 1905. This component is a sideward guiding force and can be used for effectively eliminating the free play in sideward direction. Since the fourth grooved contact surface 19022 has only one contact point with the rollers, this considerably relaxes the tolerance of the parallelism of four grooved contact surfaces for low cost mass production. The grooved contact surfaces shown in Fig. 19 are certainly not limited to be angle-shaped or flat-bottomed, they could be replaced by arc-shaped grooves as well. The rollers (balls) can also be replaced with rolling rods so that the contact feature changes from a point to a line.

As shown in Fig. 20, if the proposed voice coil motor is applied to rotary displacement, the suspension member should include two annular grooved contact surfaces 2001, 2002 and a plurality of rollers 2003. An electric member 2004 further includes a first rigid body 2005. A magnetic member 2006 also includes a second rigid body 2007. The first annular grooved contact surface 2001 and the second annular grooved contact surface 2002 can be disposed on the first rigid body 2005 or the second rigid body 2007, respectively. At least three of the rollers 2003 are placed between the two annular grooved contact surfaces 2001 and 2002. Each of the rollers 2003 has contact with each of the two annular grooved contact surfaces 2001 and 2002 with at least two points or two lines so that the counterforce at contact point also provides a radial component perpendicular to the normal coupling force 2008 in addition to the vertical component parallel to the normal coupling force 2008.

Regarding to the descriptions so far, any voice coil motor can accomplish open-loop displacement control without elastic component as long as it possesses a magnetic restoring force with displacement. The magnetic restoring force can be generated by using the magnetic circuit structure of the voice coil motor itself, as shown in Figs. 1 to 3. Alternatively, the magnetic restoring force can be generated by adopting a conventional voice coil motor with extra magnets and ferromagnetic components, as shown in Figs. 4a to 4c. In sums, a method of producing a magnetic restoring force for a voice coil motor device should comprise the following two steps:

(A) providing a ferromagnetic component in a magnetic field generated by a magnetic member having at least one permanent magnet for said voice coil motor device; and
(B) fashioning said ferromagnetic component such that there is a balance point of minimal reluctance with respect to said magnetic member along a displacement direction of said voice coil motor device, and a reluctance along a closed magnetic loop of said magnetic field will be increased when there is a relative displacement from said balance point between said ferromagnetic component and said magnetic member.

In order to enhance the damping characteristic of the voice coil motor device, the method can also comprise a step of placing a conductive metal sheet in the magnetic field, or the ferromagnetic component can further be metallurgically made of powder containing ferreous and conducting ingredients.

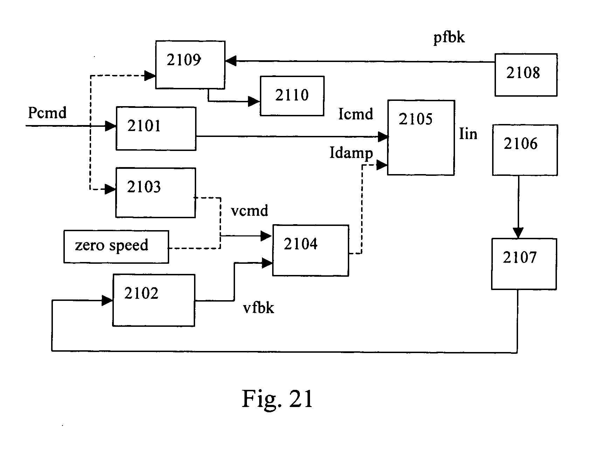

After preparing a magnetic restoring force for a voice coil motor, the following explanation will provide detailed steps of how to use this magnetic restoring force to achieve displacement control. Reference is made to Fig. 21 for better understanding.

The first step of the displacement control method is to provide a motor device having a magnetic restoring force. In this embodiment, the motor device is exemplified with a voice coil motor.

The second step of the displacement control method is to convert a displacement command Pcmd to an equivalent current command (Icmd) according to following equation

$$Icmd=(Ks/Ki)Pcmd$$

where Ks is the magnetic restoring force coefficient and defined as the magnetic restoring force produced per unit displacement,

Ki is the motor force constant and defined as the thrust produced per unit current.

The value of Ks/Ki is then equivalent to the displacement produced per unit current. An equivalent current conversion block 2101 is used to amplify the displacement command (Pcmd) with a gain of Ks/Ki.

The third step of the displacement control method is to pass the equivalent current command (Icmd) to a current command input Iin of a power amplifier 2106, which outputs a current to a coil 2107 of the voice coil motor device corresponding to the equivalent current command (Icmd). Thus, the thrust produced by the coil current will balance the magnetic restoring force produced by a displacement corresponding to the displacement command (Pcmd).

The current to the coil 2107 can be unidirectional or bidirectional when viewed from two ends of the coil. For unidirectional case, the motor only moves from the balance point of minimal reluctance toward one direction. For bidirectional case, the motor can travels in both directions. From the viewpoint of a power supply, the current rating of the bidirectional mode is only half of that of the unidirectional mode based on the criteria of same magnetic restoring force coefficient and same displacement stroke. Hence, bidirectional mode driving scheme will considerably reduce the power consumption and the cost of power distribution circuit, which is very important for the portable electronics devices which use batteries as power source.

The aforementioned control method is an open-loop scheme, which only guarantees the displacement for a specific current. The absolute positioning of the voice coil motor will be influenced especially when the motion direction is the same as the gravity direction. This is because the thrust produced by the coil current should overcome the weight of movable member and the magnetic restoring force to halt at predetermined position. In fact, the angle between relative motion direction and the gravity direction changes all the time for portable devices. Therefore, in order to realize absolute positioning, it is necessary to employ the closed-loop control scheme to estimate the steady-state position error caused by the gravity interference. As a result, the above displacement control method further comprises the following steps:

(A) employing a position sensor 2108 to detect the real-time position of a movable member of the voice coil motor device to get an equivalent real-time position feedback (pfbk);
(B) using a subtraction block 2109 to subtract the equivalent real-time position feedback (pfbk) from the displacement (Pcmd) and get a difference value, then using a control operation block 2110 including at least an integral step to integrate the difference value to get a position-error-compensation current command (Icomp); and
(C) using a summing block 2105 to add the position-error-compensation current command (Icomp) to the equivalent current command (Icmd).

The above control method is quite simple, since only one single integral step needs to be implemented. Indeed, if the transient response needs to be polished, the conventional proportional-differential-integral control algorithm can be applied.

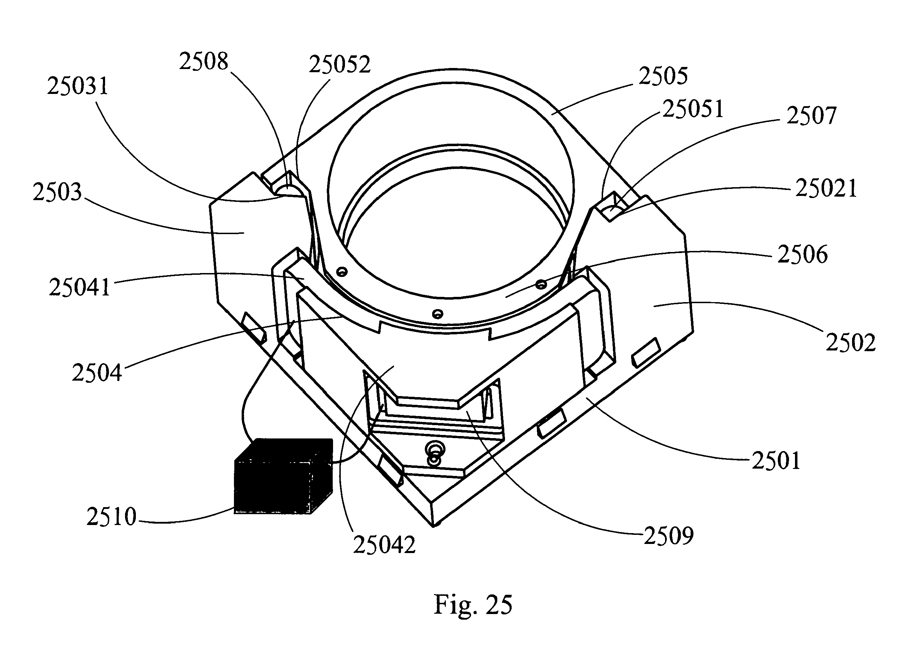

The position sensor used in the above closed-loop position control method can be an optical scale, an optical reflector, an eddy-current proximity sensor, a laser range detector, and so on. It should be noted that if a Hall element or a magnetoresistive element is adopted, there is an advantage in space when applied to space-sensitive portable electronics. This is due to the magnetic field produced by the magnetic member of the proposed voice coil motor can be used as the target to be detected relatively to the displacement. The detailed implementation is shown in Fig. 25.

The present invention finally extents the scope of above open-loop displacement control method to that it is capable of enhancing the damping characteristic without using any position sensor, conducting metal sheet or damping adhesive. This method not only can be applied to the proposed voice coil motor having a magnetic restoring force, but also to conventional ones with elastic component.

According to Lenz's law, the voltage of back electromotive force (BEMF) at two ends of a coil is proportional to the relative speed. The ratio is called the motor voltage constant. In the present invention, this BEMF voltage is detected as a signal of the motor speed, and this signal is then fed back to enhance the system damping. To achieve this goal, the above open-loop displacement control method can further comprise the following steps:

In Step 1, a speed conversion block 2102 measures the BEMF voltage (E) across two ends of the coil 2107, which is then converted to a real speed feedback (vfbk) according to the following equation:

$$vfbk=E/Kv;$$

where Kv is the motor voltage constant Kv and defined as the BEMF voltage produced per unit speed.

In Step 2, a subtraction-gain block 2104 subtracts the real speed feedback (vfbk) from a speed command (vcmd) to get a speed error (verr), which is then amplified with a gain G to get a damping-compensation current command (Idamp) according to the following equation:

$$Idamp=G*verr=G*(vcmd-vfbk).$$

In Step 3, the summing block 2105 adds the damping-compensation current command (Idamp) to the equivalent current command (Icmd). The mathematical expression is:

$$Iin=Icmd+Idamp=Icmd+G*verr$$

As can be seen from the equation above, the current command input (Iin) contains two terms, i.e., a steady-state current term (Icmd) and a transient current term (G*verr). The thrust produced by the steady-state current term (Icmd) is exactly equal to the restoring force of the displacement, and the transient current term G*verr is used for suppressing the speed error verr to zero. Therefore, the oscillation period after achieving a displacement can be shortened effectively.

The speed command (vcmd) in Step 2 can be simply an equivalent command of zero speed to simplify the control algorithm, which will result in a slower step response. The mathematical expression is:

$$verr=0-vfbk=-vfbk.$$

The speed command (vcmd) in Step 2 can also be obtained by using a differentiation block 2103 to differentiate the displacement command (Pcmd), which will lead to a quicker step response. The mathematical expression is:

$$verr=(d/dt)Pcmd-vfbk.$$

The following paragraphs is dedicated to show how to realize the present invention in various consumer products by illustrating several optimal embodiments.
For an optical pickup head of a CD-ROM or DVD player, two degrees of freedom of motion and open-loop displacement control are required. The following embodiment illustrates how to manipulate the present invention for this application.

As shown in Fig. 22, the flat electric member 2202 containing a first coil 22021 and a flat yoke 22022 is rigidly connected to the base 2201. A movable lens holder 2203 suspended over the base 2201 has an arc-shaped yoke 22041, a first magnet 22042 and a second magnet 22043. According to such arrangement, the displacements of the lens holder along first arrow direction 2205 and second arrow direction 2206 will both produce magnetic restoring forces. At the opposite side of the arc-shaped yoke 22041, the lens holder 2203 further includes a third magnet 22044 and a fourth magnet 22045 where both are polar anisotropic. A second coil 22023 is disposed on the inner surface of a vertical wall 22011, which is also rigidly connected to the base 2201. To achieve parallel displacement in two directions, a first parallel constraint structure 22031 and a second parallel constraint structure 22032 are employed and parallelly installed. Each of the parallel constraint structures consists of two parallel and equal-length wire-shaped traction components with one end fixed to the lens holder 2203 and the other end to the vertical wall 22011. All the wire-shaped traction components will be erected by the attractive force between the first and second magnets 22042 and 22043 and the flat yoke 22022. The displacement control for such device can be explained as follows. When the first coil 22021 carries a current, the thrust generated by this current will move the lens holder 2203 along the first arrow direction 2205 and then balanced by the magnetic restoring force along the first arrow direction 2205 to achieve a predetermined displacement. Similarly, when the second coil 22023 carries a current, the thrust generated by this current will move the lens holder 2203 along the second arrow direction 2206 and then balanced by the magnetic restoring force along the second arrow direction 2206.

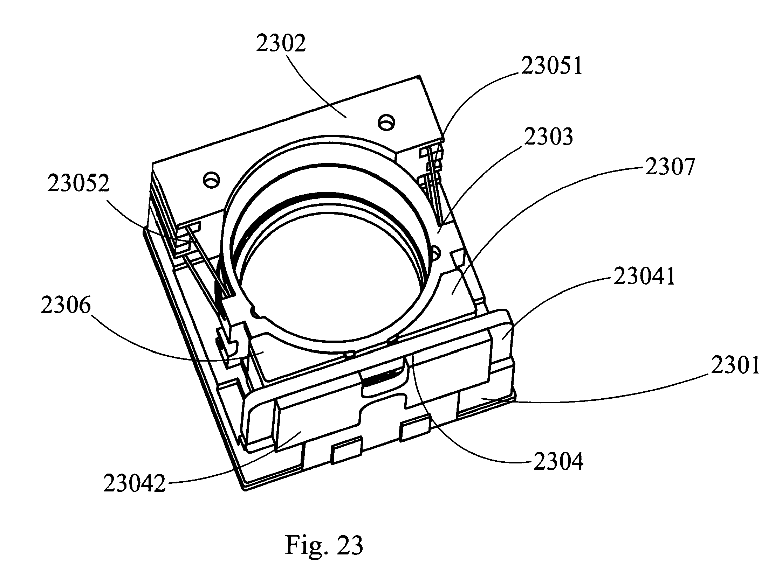

For an auto-focus camera module embedded in a notebook PC or a mobile phone, minimal cubic volume and open-loop displacement control are required. There are two optimal embodiments as follows.
As shown in Fig. 23, a flat electric member 2304 containing a coil 23041 and a yoke 23042 is rigidly connected to the base 2301. A movable lens holder 2303 suspended over the base 2301 has a first magnetic member 2306 and a second magnetic member 2307. These two magnetic members are disposed at two corners of the lens holder 2303 to achieve a minimal cubic volume. To achieve parallel displacement without tilt, a first parallel constraint structure 23051 and a second parallel constraint structure 23052 are employed and non-parallel installed. Each of the parallel constraint structures consists of two parallel and equal-length wire-shaped traction components with one end fixed on the lens holder 2303 and the other on the vertical wall 2302. All the wire-shaped traction components will be erected by the attractive force between the first and second magnetic members 2306 and 2307 and the yoke 23042. The displacement control of such a device can be explained as follows. When the coil 23041 carries a current, the thrust generated by this current will move the lens holder 2303 parallel to the yoke 23042 and finally be balanced by the magnetic restoring force to achieve a predetermined displacement.

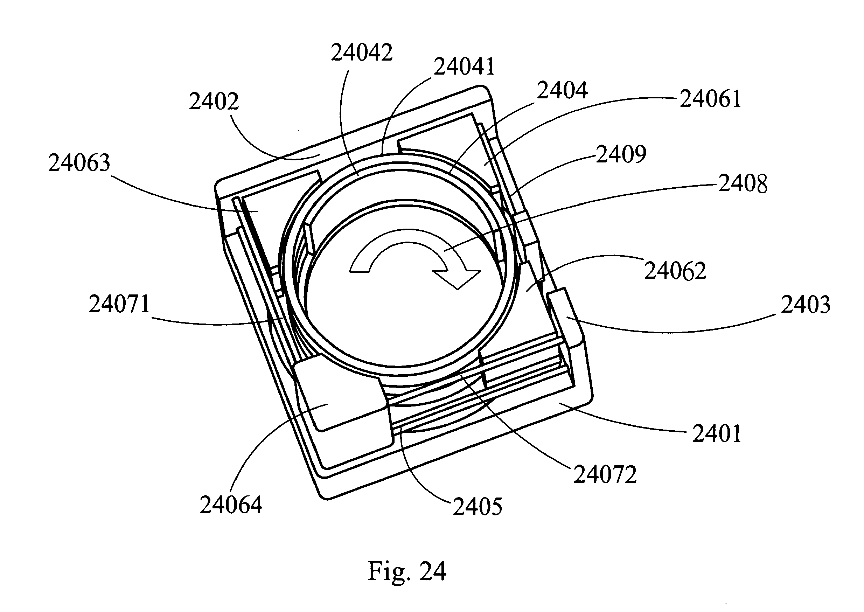

As shown in Fig. 24. A first vertical wall 2402 and a second vertical wall 2403 are disposed on two sides of a base 2401. A cylindrical electric member 2404 containing a coil 24041 and an arc-shaped yoke 24042 is rigidly connected to the base 2401. A movable lens holder 2405 suspended over the base 2401 has a first magnetic member 24061, a second magnetic member 24062, a third magnetic member 24063 and a vertical post 24064. These three magnetic members and the vertical post 24064 are disposed at four corners of the lens holder 2405 to achieve a minimal cubic volume. To achieve parallel displacement without tilt, a first parallel constraint structure 24071 and a second parallel constraint structure 24072 are employed and installed perpendicularly to each other. Each of the parallel constraint structures consists of two parallel and equal-length wire-shaped traction components with one end fixed to the vertical post 24064 and the other to the vertical walls 2402, 2403. All the wire-shaped traction components will be erected by the attractive force between the first and third magnetic members 24061 and 24063 and the electric member 2404. Moreover, the centerline of the yoke 24042 is offset relative to the first and third magnetic members 24061 and 24063 to produce a torque along an arrow direction 2408. Therefore, it is necessary to add a wire-shaped traction component 2409 whose two ends are connected to the vertical post 24064 and the first vertical wall 2402, respectively. The wire-shaped traction component 2409 is erected by the torque mentioned above to further eliminate rotation and sideward deviation. When the coil 24041 carries a current, the thrust generated by this current will be balanced by the magnetic restoring force produced by the yoke 24042 and the first and third magnetic members 24061 and 24063 to achieve a predetermined displacement.

For a high-end auto-focus camera module of a mobile phone, minimal cubic volume and close-loop displacement control are required, which is illustrated in the following embodiment.

As shown in Fig. 25, a first vertical post 2502 and a second vertical post 2503 are disposed at two opposite corners of a base 2501. An electric member 2504 containing a coil 25041 and a yoke 25042 is rigidly connected to the base 2501 and disposed at another corner. A movable lens holder 2505 having an arc-shaped magnetic member 2506 is suspended over the base 2501. The first vertical post 2502 has a first grooved contact surface 25021, while the second vertical post 2503 has and a second grooved contact surface 25031. The lens holder 2505 has a third grooved contact surface 25051 and a fourth grooved contact surface 25052 with respect to the first grooved contact surface 25021 and the second grooved contact surface 25031. A first set of balls 2507 is clamped between the first grooved contact surface 25021 and the third grooved contact surface 25051, while a second set of balls 2508 is clamped between the second grooved contact surface 25031 and the fourth grooved contact surface 25052. An attractive force between a magnetic member 2506 and the electric member 2504 will preload all the balls such that sideward free play and tilt angle will be eliminated. Furthermore, the device also contains a position sensor 2509 and a position controller 2510. A Hall element or a magnetoresistive element is employed for the position sensor 2509, which is placed in a hole of the yoke 25042 and close to the surface of the magnetic member 2506 to minimize the size of the whole device. The position controller 2510 is electrically connected to the position sensor 2509 to compensate the steady-state error caused by different postures of operation.

Although the present invention has been described with reference to the preferred embodiment thereof, it will be understood that the invention is not limited to the details thereof. Various substitutions and modifications have been suggested in the foregoing description, and other will occur to those of ordinary skill in the art. Therefore, all such substitutions and modifications are intended to be embraced within the scope of the invention as defined in the appended claims.

**Claims**

1.    A voice coil motor comprising:

a magnetic member including at least one permanent magnet for producing at least one magnetic field; and
an electric member including at least one coil arranged in said magnetic field with an air gap kept from said magnetic member for providing a thrust in at least one relative motion direction, **characterized in that**
said electric member further includes at least one ferromagnetic component disposed in a closed magnetic loop of said magnetic field and remained statically with respect to said coil, such that at least one normal coupling force due to flux linkage between said ferromagnetic component and said magnetic member is provided, and at least one magnetic restoring force is produced upon a reluctance variation of said closed magnetic loop due to a relative displacement between said ferromagnetic component and said magnetic member.

2.    The voice coil motor as claimed in claim 1, wherein said magnetic member further includes at least one yoke such that said magnetic field is able to form at least two magnetic poles of different polarities on a surface of said magnetic member facing said electric member and adjacent to said air gap.

3. The voice coil motor as claimed in claim 1, wherein at least one groove along said relative motion direction is disposed on a surface of said magnetic member facing said electric member.

4. The voice coil motor as claimed in claim 1, wherein said magnetic member is stationary and said electric member is movable, or said magnetic member is movable and said electric member is stationary.

5. The voice coil motor as claimed in claim 1, wherein at least one groove or hole is disposed on a surface of said ferromagnetic component facing said magnetic member.

6. The voice coil motor as claimed in claim 1, wherein first and second side surfaces of said ferromagnetic component parallel to said relative motion direction is two parallel planes, or further have at least one plane with different slope or altitude.

7. The voice coil motor as claimed in claim 1, wherein a surface of said ferromagnetic component facing said magnetic member further has at least one plane with different slope or altitude.

8. The voice coil motor as claimed in claim 1, wherein said ferromagnetic component further has an extension portion that surrounds one side of said magnetic member, or a centerline of said ferromagnetic component is arranged not to align with the centerline of said magnetic member.

9. The voice coil motor as claimed in claim 1, wherein said electric member further includes a second ferromagnetic component or a permanent magnet disposed in said magnetic field not coupled directly with said coil.

10. The voice coil motor as claimed in claim 1, wherein said electric member further includes a conducting metal sheet arranged in said magnetic field generated by said magnetic member.

11. The voice coil motor as claimed in any of claims 1 to 10, further comprising a suspension member, whereby said air gap and a relatively parallel motion between said magnetic member and said electric member is maintained, wherein said normal coupling force is used to preload said suspension member so as to eliminate tilt angle and free play.

12. The voice coil motor as claimed in claim 11, wherein said suspension member comprises a plurality of traction components, and at least two of said traction components are equal in length and parallel to form a parallel constraint structure.

13. The voice coil motor as claimed in claim 12, wherein each said traction component having first and second ends is made of deformable material, wherein said first end is connected to or disposed stationary with respect to said magnetic member, and said second end is connected to or disposed stationary with respect to said electric member; or each said traction component is a hinge having first and second joints, wherein said first joint is rotationally connected to said magnetic member, and said second joint is rotationally connected to said electric member.

14. The voice coil motor as claimed in claim 11, wherein said suspension member includes first, second, third, fourth grooved contact surfaces and a plurality of rollers, wherein said first and said second grooved contact surfaces are disposed on said magnetic member and said electric member respectively, at least two of said rollers are placed between said first and said second grooved contact surfaces, each roller has at least two contact points or two contact lines with respect to each of said first and second grooved contact surfaces; said third and said fourth grooved contact surfaces are also disposed on said magnetic member and said electric member respectively, at least two of said rollers are placed between said third and said fourth grooved contact surfaces, each roller has at least one contact point or one contact line with respect to one of said third and forth grooved contact surfaces.

15. The voice coil motor as claimed in claim 11, wherein said suspension member includes first, second annular grooved contact surfaces and a plurality of rollers, wherein said first and said second annular grooved contact surfaces are disposed on said magnetic member and said electric member respectively, at least three of said rollers are placed between said first and said second annular grooved contact surfaces, each roller has at least two contact points or two contact lines with respect to each of said first and second annular grooved contact surfaces.

16. A method of producing a magnetic restoring force for a voice coil motor device comprising the steps of:

(A) providing a ferromagnetic component in a magnetic field generated by a magnetic member having at least one permanent magnet for said voice coil motor device; and
(B) fashioning said ferromagnetic component such that there is a balance point of minimal reluctance with respect to said magnetic member along a displacement direction of said voice coil motor device, and a reluctance along a closed magnetic loop of said magnetic field will be increased when there is a relative displacement from said balance point between said ferromagnetic component and said magnetic member.

**17.** The method as claimed in claim 16 further comprising the step of placing a conductive metal sheet in said magnetic field.

**18.** A method of using a magnetic restoring force to accomplish displacement control comprising the steps of:

(A) employing a motor device having a magnetic restoring force;
(B) transforming a displacement command to an equivalent current command according to a value of displacement per unit current of said motor device; and
(C) passing said equivalent current command to a power amplifier electrically connected to a coil of said motor device to generate a current in said coil for providing a thrust equal to said magnetic restoring force corresponding to said displacement command.

**19.** The method as claimed in claim 18 further comprising the following steps to achieve closed-loop absolute position control:

(A) employing a position sensor to detect a real-time position of a movable member of said motor device to get an equivalent real-time position feedback;
(B) applying a control algorithm having at least one integral step to an error between said displacement command and said equivalent real-time position feedback to get a position-error-compensation current command; and
(C) adding said position-error-compensation current command to said equivalent current command.

**20.** The method as claimed in claim 18 further comprising the following steps to enhance the damping characteristic:

(A) detecting a voltage due to back electromotive force across two ends of said coil of said motor device to get an equivalent speed feedback of a movable member of said motor device;
(B) subtracting said equivalent speed feedback from a speed command equivalent to zero speed or obtained by differentiating said displacement command to get a speed error and then amplifying said speed error with a control gain to get an damping-compensation current command; and
(C) adding said damping-compensation current command to said equivalent current command.

Fig. 1a

Fig. 1b

Fig. 2

Fig. 3

Fig. 4a

Fig. 4b

Fig. 4c

Fig. 5

Fig. 6a

Fig. 6b

625

626

Fig. 6c

Fig. 7a

Fig. 7b

804

803

802

801

**Fig. 8a**

806

805

**Fig. 8b**

802

803

808

807

801

**Fig. 8c**

Fig. 9

903

9031

9021

902

901

904

905

EP 1 953 903 A1

Fig. 10

Fig. 11a

1102

1101

1103

1104

Fig. 11b

1102

1101

1105

Fig. 12a

Fig. 12b

EP 1 953 903 A1

Fig. 13

Fig. 14

Fig. 15

Fig. 16

1603

1605

1601

1606

1607

1602

1604

Fig. 17

Fig. 18

18012

1804

18013

1801

18011

18021

1805

1806

1802

1803

Fig. 19

Fig. 20

Fig. 21

Fig. 22

Fig. 23

Fig. 24

EP 1 953 903 A1

Fig. 25

26011

26013

2604

26051

2603

26053

26014

26012

26052

Fig. 26

2703

2702

2704

2701

Fig. 27

**European Patent Office**

**EUROPEAN SEARCH REPORT**

Application Number

EP 07 00 1974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 100 41 939 A1 (BOB BOBOLOWSKI GMBH [DE]) 7 March 2002 (2002-03-07) | 16 | INV. H02K41/035 |
| A | * column 2, line 34 - line 60; figure 1 * | 1 | |
| | ----- | | |
| X | US 5 973 422 A (CLAMME MARVIN L [US]) 26 October 1999 (1999-10-26) | 1-10,16, 17 | |
| A | * column 2, line 66 - column 4, line 4 * * column 5, line 22 - line 38 * * column 6, line 14 - line 31 * * figures 1,2,10 * | 11-13 | |
| | ----- | | |

TECHNICAL FIELDS SEARCHED (IPC)

H02K

~~The present search report has been drawn up for all claims~~

| Place of search | Date of completion of the search | Examiner |
|---|---|---|
| Munich | 6 July 2007 | MAYER-MARTIN, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................
& : member of the same patent family, corresponding document

EPO FORM 1503 03.82 (P04C01)

European Patent

Office

---

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-17

**European Patent Office**

**LACK OF UNITY OF INVENTION SHEET B**

Application Number

EP 07 00 1974

The Search Division considers that the present European patent application does not comply with the requirements of unity of invention and relates to several inventions or groups of inventions, namely:

1. claims: 1-17

   Magnetic restoring force in a voice coil motor is achieved by arranging a ferromagnetic component in a magnetic field generated by a magnet of the motor such, that upon relative displacement of the ferromagnetic component and the magnet a reluctance of a closed loop along the magnetic field is varied.
   ---

2. claims: 18-20

   Displacement control of a motor device is accomplished by transforming a displacement command into a current of a coil such that the thrust generated by the coil is equal to a magnetic restoring force.
   ---

**ANNEX TO THE EUROPEAN SEARCH REPORT
ON EUROPEAN PATENT APPLICATION NO.** EP 07 00 1974

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2007

| Patent document cited in search report | | Publication date | Patent family member(s) | | Publication date |
|---|---|---|---|---|---|
| DE 10041939 | A1 | 07-03-2002 | NONE | | |
| US 5973422 | A | 26-10-1999 | AT | 355649 T | 15-03-2006 |
| | | | AU | 4861699 A | 14-02-2000 |
| | | | CA | 2379534 A1 | 03-02-2000 |
| | | | DK | 1101273 T3 | 25-06-2007 |
| | | | EP | 1101273 A1 | 23-05-2001 |
| | | | JP | 2002521185 T | 16-07-2002 |
| | | | WO | 0005805 A1 | 03-02-2000 |

EPO FORM P0459

For more details about this annex : see Official Journal of the European Patent Office, No. 12/82